# EUROPEAN PATENT SPECIFICATION

(11) **EP 1 664 181 B1**
(45) Date of publication and mention of the grant of the patent: **20.12.2006**
(21) Application number: 04787159.5
(22) Date of filing: 17.09.2004
(51) Int. Cl.: C08K 5/5317, C08K 5/5313, C08G 63/00, C08L 67/00

(54) **PROCESS FOR IMPROVING COLOR OF POLYCONDENSATES**
VERFAHREN ZUR VERBESSERUNG DER FARBE VON POLYKONDENSATEN
PROCESSUS D'AMELIORATION DE LA COULEUR DE POLYCONDENSATS

(30) Priority: 26.09.2003 EP 03103568
(43) Date of publication of application: 07.06.2006
(73) Proprietor: Ciba Specialty Chemicals Holding Inc., 4057 Basel (CH)
(72) Inventor: SIMON, Dirk, 79541 Lörrach-Brombach (DE); ERGENC, Nadi, Croton on Hudson, NY 10520 (US)
(86) International application number: PCT/EP2004/052218
(87) International publication number: WO 2005/030857

(56) References cited:
- EP-A- 1 016 692
- EP-A- 1 054 031
- US-A- 4 304 569

## Description

The present invention relates to a process for the preparation or modification of a polycondensate in the presence of a fluorescent whitening agent and at least one phosphonate and/or phosphinate. Further aspects of the invention are a polyester prepared according to this process and a composition comprising a polycondensate, a fluorescent whitening agent and at least one phosphonate and/or phosphinate. Yet another aspect is the use of a fluorescent whitening agent and at least one phosphonate and/or phosphinate for improving the color of a polycondensate.

Polycondensates, for example polyamides, polycarbonates or polyesters, in particular polyethylene terephthalate (PET) and polybutylene terephthalate (PBT) as well as polyester copolymers and polyester blends e.g. with polycarbonate (PBT/PC), are important thermoplastics belonging to the group of the engineering plastics. Partially crystalline polyesters are used for injection moulding compounds and are distinguished by high strength and rigidity, high dimensional stability and favourable wear characteristics. Amorphous polyesters have high transparency, superior toughness and excellent stress cracking resistance and are processed, for example, to hollow articles. Another field of application of PET is the production of fibres and foils.

For some applications, such as, for example, packages for beverages and technical fibres, higher molecular weights are necessary. These can be obtained by solid phase polycondensation (S.Fakirov, Kunststoffe, 74 (1984), 218 and R. E. Grützner, A. Koine, Kunststoffe, 82 (1992), 284). The prepolymer is in this case subjected to thermal treatment above the glass transition temperature and below the melt temperature of the polymer under inert gas or under vacuum. However, this method is very time- and energy-consuming. Increasing the intrinsic viscosity requires a residence time of up to 12 hours under vacuum or under inert gas at temperatures from 180 to 240°C.

Within the context of the present invention the term "polycondensation reaction" means both, the melt polycondensation of monomers or oligomers, as well as the solid state polycondensation.
Often these articles need very good appearance, particularly in terms of color, clarity and brightness. It is known in the art, that adding a phosphonate during the polycondensation reaction can prevent yellowing of polycondensates. This is, however, in some cases accompanied by a decrease of clarity or brightness.

On the other hand the addition of a fluorescent whitening agent can also improve color and brightness of the polycondensate. This is, for example, described by A. Wieber in Fluorescent Whitening Agents, edited by R. Anliker and G. Muller, Georg Thieme, 1975 pages 65-82. However, the addition of a fluorescent whitening agent to a polycondensate during the condensation reaction imposes great demands on their chemical and thermal behavior. Thermal stability must be high and the compound must be inert under the condensation reaction conditions. Moreover, the fluorescent whitening agents need to be stable also during processing of polycondensates, which is mainly performed at high temperatures (e.g. above 240°C). Sometimes recrystallization during cooling of the melt is observed, leading to an undesired discoloration, mainly to a greenish shade.

Another problem is the color contribution of the neat fluorescent whitening agents. Due to their conjugated aromatic structures, often the fluorescent whitening agents show a yellowish appearance. This color contributes to the color of the polycondensate and leads to more yellowish end products. It is known in the art, that it is difficult to compensate this effect, while simultaneously improving brightness of the polycondensates.

Surprisingly, it has been found that polycondensates prepared in the presence of a fluorescent whitening agent and a phosphonate or phosphinate show excellent brightness and color, in particular no undesired color change, such as a greenish shade or yellowing is observed.

This is of particular interest in the high demanding applications of polycondensates, where appearance and color is essential, such as in non-colored or colored textiles, in packaging applications, in windows and window films, etc.

To improve color is also advantageous in the case of used or thermally or hydrolytically damaged polycondensates, where the damage typically goes hand in hand with a discoloration.

By means of the process of this invention it is possible to improve color of polycondensate recyclates from useful material collections, such as used packages (foils and bottles) and waste textiles. Recyclates can then be used for high-quality recycling, for example in the form of high-performance fibres, injection moulding articles, in extrusion applications or in the form of foams. Such recyclates originate, for example, also from industrial or domestic useful material collections, from production wastes, such as from fibre production and trimmings, or from obligatory returnables, such as bottle collections of PET drinks packs.

One aspect of the invention is a process for the preparation of a polycondensate in a condensation reaction of monomers or oligomers or the modification of a polycondensate by melt processing or solid-state polycondensation of the polycondensate, comprising adding during the polycondensation reaction
a1) a compound of formula (I) 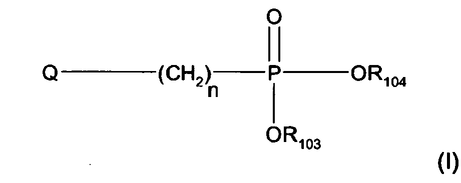 wherein
   Rᵢₒ₃ is H, C₁-C₂₀alkyl, unsubstituted or C₁-C₄alkyl-substituted phenyl or naphthyl,
   R₁₀₄ is hydrogen, C₁-C₂₀alkyl, unsubstituted or C₁-C₄alkyl-substituted phenyl or naphthyl; or
   M^{r+}/r,
   M^{r+} is an r-valent metal cation or the ammonium ion,
   n is 0, 1, 2, 3, 4, 5 or 6, and
   r is 1, 2, 3 or 4;
   Q is hydrogen, -X-C(O)-OR₁₀₇, or a radical 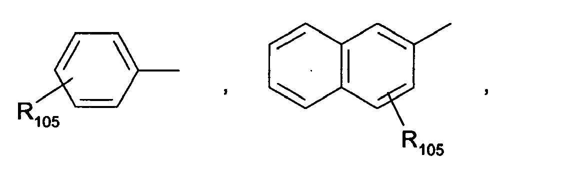 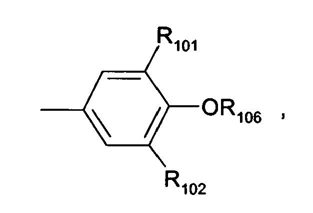
   R₁₀₁ is isopropyl, tert-butyl, cyclohexyl, or cyclohexyl which is substituted by 1-3 C₁-C₄alkyl groups,
   R₁₀₂ is hydrogen, C₁-C₄alkyl, cyclohexyl, or cyclohexyl which is substituted by 1-3 C₁-C₄alkyl groups,
   R₁₀₅ is H, C₁-C₁₈alkyl, OH, halogen or C₃-C₇cycloalkyl;
   R₁₀₆ is H, methyl, trimethylsilyl, benzyl, phenyl, sulfonyl or C₁-C₁₈alkyl;
   R₁₀₇ is H, C₁-C₁₀alkyl or C₃-C₇cycloalkyl; and
   X is phenylene, C₁-C₄alkyl group-substituted phenylene or cyclohexylene; or
a2) a compound of formula (II) 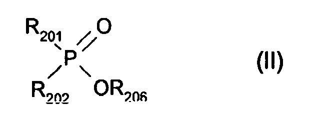 wherein
   R₂₀₁ is hydrogen, C₁-C₂₀alkyl, phenyl or C₁-C₄alkyl substituted phenyl; biphenyl, naphthyl, -CH₂-O-C₁-C₂₀alkyl or -CH₂-S-C₁-C₂₀alkyl,
   R₂₀₂ is C₁-C₂₀alkyl, phenyl or C₁-C₄alkyl substituted phenyl; biphenyl, naphthyl, -CH₂-O-C₁-C₂₀alkyl or -CH₂-S-C₁-C₂₀alkyl, or R₁ and R₂ together are a radical of the formula III 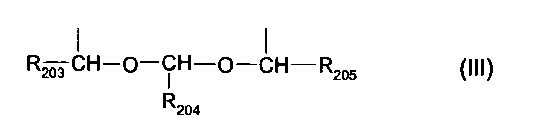 wherein
      R₂₀₃, R₂₀₄ and R₂₀₅ independently of each other are C₁-C₂₀alkyl, phenyl or C₁-C₄alkyl substituted phenyl;
      R₂₀₆ is hydrogen, C₁-C₁₈alkyl or the ion of an alkali metal or the ammonium ion or
      R₂₀₆ is a direct bond, which forms together with R₂₀₂ an aliphatic or aromatic cyclic ester; or
a3) a compound of formula (I) and formula (II); and
b) a fluorescent whitening agent selected from the group consisting of a compound according to formulae 1-8 or a mixture thereof 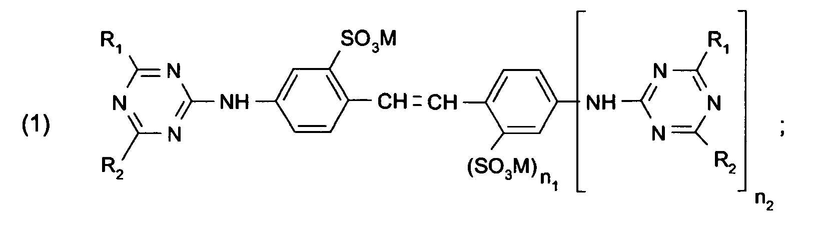 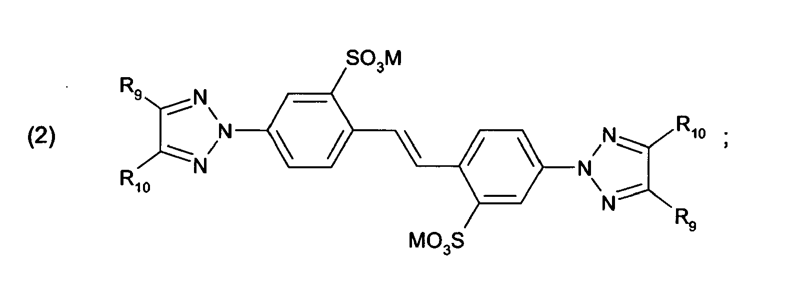 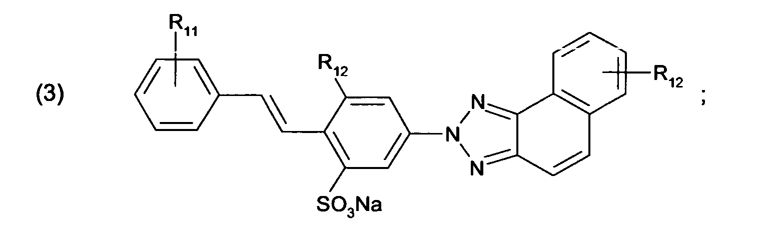 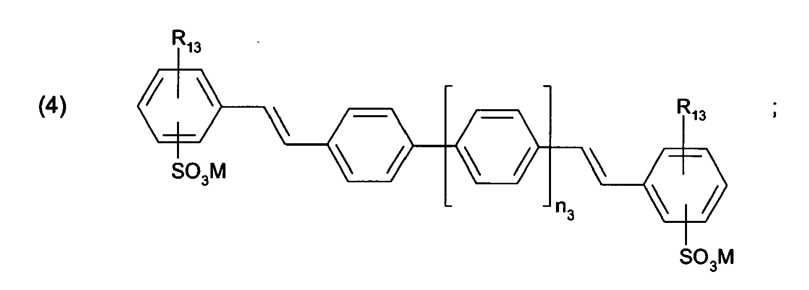 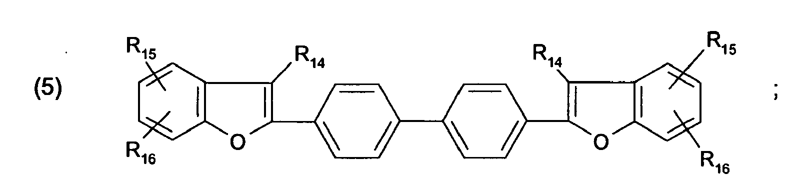 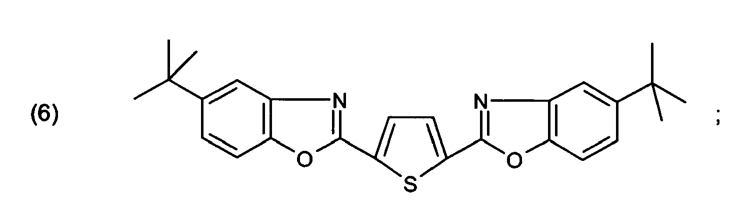 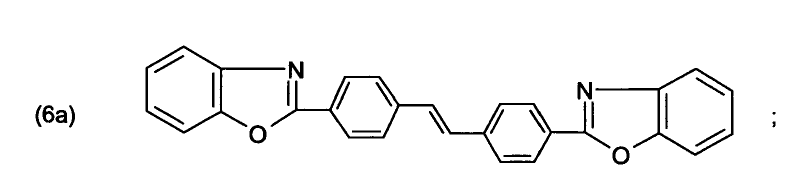 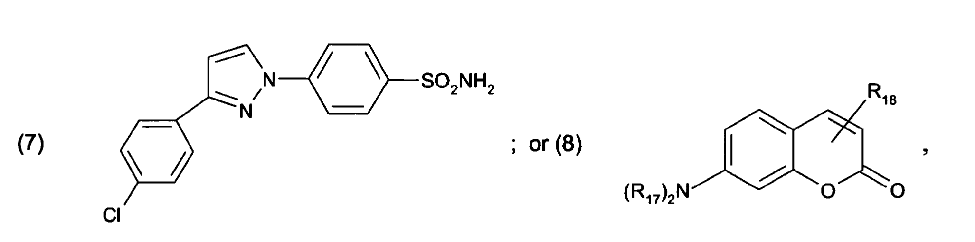 in which formulae
   - R₁: is a radical of formula 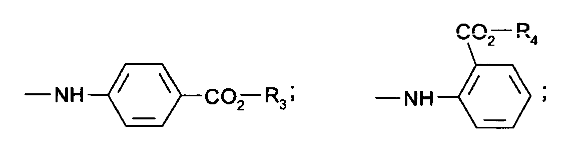 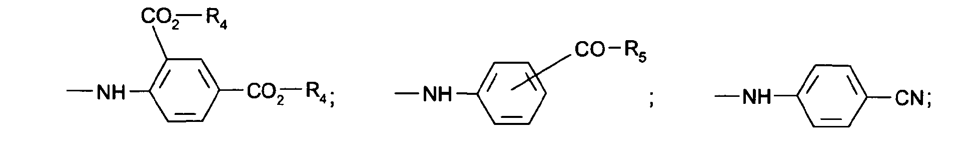 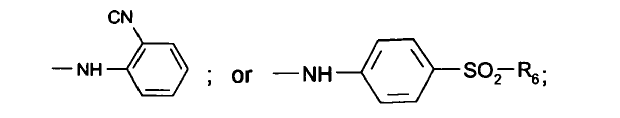
   - R₃: is an unsubstituted or substituted alkyl or aryl group;
   - R₄: is M, or an unsubstituted or substituted alkyl or aryl group;
   - R₅: is hydrogen; an unsubstituted or substituted alkyl or aryl group; or -NR₇R₈, wherein R₇ and R₈ are each independently of the other hydrogen or an unsubstituted or substituted alkyl or aryl group, or R₇ and R₈ together with the nitrogen atom linking them form a heterocyclic radical, especially a morpholino or piperidino radical;
   - R₆: is hydrogen, or an unsubstituted or substituted alkyl or aryl group;
   - R₂: is hydrogen; an unsubstituted or substituted alkyl or aryl group; or a radical of formula 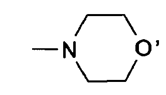 -OH, -NH₂, -N(CH₂CH₂OH)₂, -N[CH₂CH(OH)CH₃]₂, -NH-R₄, -N(R₄)₂ or -OR₄; or
   - R₁ and R₂: are each independently of the other -OH, -Cl, -NH₂, -O-C₁-C₄alkyl, -O-aryl, -NH-C₁-C₄alkyl, -N(C₁-C₄alkyl)₂, -N(C₁-C₄alkyl)(C₁-C₄hydroxyalkyl), -N(C₁-C₄hydroxyalkyl)_{2'} -NH-aryl, morpholino or -S-C₁-C₄alkyl(aryl);
   - R₉ and R₁₀: are each independently of the other hydrogen, C₁-C₄alkyl, phenyl or a radical of formula 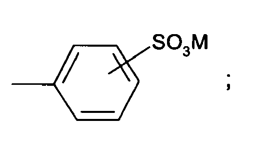
   - R₁₁: is hydrogen, -Cl or SO₃M;
   - R₁₂: is -CN, - SO₃M -S(C₁-C₄alkyl)₂ or -S(aryl)₂;
   - R₁₃: is hydrogen, -SO₃M, -O-C₁-C₄alkyl, -CN, -Cl, -COO-C₁-C₄alkyl or -CON(C₁-C₄alkyl)₂;
   - R₁₄: is hydrogen, -C₁-C₄alkyl, -Cl or -SO₃M;
   - R₁₅ and R₁₆: are each independently of the other hydrogen, C₁-C₄alkyl, -SO₃M, -Cl or -O-C₁-C₄ alkyl.
   - R₁₇: is hydrogen or C₁-C₄alkyl;
   - R₁₈: is hydrogen, C₁-C₄ alkyl, -CN, -Cl, -COO-C₁-C₄alkyl, -CON(C₁-C₄alkyl)₂' aryl or -O-aryl;
   - M: is hydrogen, sodium, potassium, calcium, magnesium, ammonium, mono-, di-, tri- or tetra-C₁-C₄alkylammonium, mono-, di- or tri-C₁-C₄hydroxyalkylammonium, or ammonium di- or tri-substituted by a mixture of C₁-C₄alkyl and C₁-C₄hydroxyalkyl groups; and
   - n₁, n₂ and n₃: are each independently of the others 0 or 1.

Preferably no Al containing condensation catalyst is present or has been used in the polycondensation reaction.

In addition to polyester, polyamide or polycarbonate, this invention also embraces the corresponding copolymers and blends, for example PBT/PS, PBT/ASA, PBT/ABS, PBT/PC, PET/ABS, PET/PC, PBT/PET/PC, PBT/PET, PA/PP, PA/PE and PA/ABS. However, it needs to be taken into account that the novel process, like all methods allowing exchange reactions between the components of the blend, may influence the blends, i.e. may result in the formation of copolymeric structures.

A preferred process is that wherein the polycondensate is an aliphatic or aromatic polyester, an aliphatic or aromatic polyamide or polycarbonate, or a blend or copolymer thereof.

The polycondensate is for example polyethylene terephthalate (PET), polybutylene therephthalate (PBT), polyethylenenaphthalate (PEN), polytrimethylene terephthalate (PTT), a copolyester, PA 6, PA 6.6, a polycarbonate containing bisphenol A, bisphenol Z or bisphenol F linked via carbonate groups.

Preferred polycondensates are PBT, PET or a copolymer with PBT or PET.

The polycondensate may also be a recyclate.

In a specific embodiment of the invention the polycondensate according to the above process exhibits a L value, which is greater than 80 and a b value which is less than 2, as measured with a spectrometer according to ASTM D1925.

Polyamides, i.e. both virgin polyamides and polyamide recyclates, are understood to be, for example, aliphatic and aromatic polyamides or copolyamides which are derived from diamines and dicarboxylic acids and/or of aminocarboxylic acid or the corresponding lactams. Suitable polyamides are for example: PA 6, PA 11, PA 12, PA 46, PA 66, PA 69, PA 610, PA 612, PA 10.12, PA 12.12 and also amorphous polyamides and thermoplastic polyamide elastomers such as polyether amides of the Vestamid, Grilamid ELY60, Pebax, Nyim and Grilon ELX type. Polyamides of the cited type are commonly known and are commercially available.

The polyamides used are preferably crystalline or partially crystalline polyamides and, in particular, PA6 and PA6.6 or their blends, as well as recyclates on this basis, or copolymers thereof.

The polyesters, i.e. virgin polyester as well as polyester recyclate, may be homopolyesters or copolyesters which are composed of aliphatic, cycloaliphatic or aromatic dicarboxylic acids and diols or hydroxycarboxylic acids.

The polyesters can be prepared by direct esterification (PTA process) and also by transesterification (DMT process). Any of the known catalyst systems may be used for the preparation.

The components a1), a2), a3) and b) can be added at any stage of the condensation reaction in either process. Preferably they are present from the beginning. In case that high molecular weights are desired, after melt polycondensation the polycondensate can be subjected to a solid state polycondensation.

Alternatively, the components a1), a2), a3) and b) can be added during melt processing. Subsequently, the polycondensate can be subjected to a solid state polycondensation.
The components a1), a2), a3) and b) can be added all at once, or in different process steps, e.g. either component a1), a2), a3) and b) during melt polycondensation, or component a1), a2), a3 during melt polycondensation and component b) during melt processing, or vice versa.

The aliphatic dicarboxylic acids can contain 2 to 40 carbon atoms, the cycloaliphatic dicarboxylic acids 6 to 10 carbon atoms, the aromatic dicarboxylic acids 8 to 14 carbon atoms, the aliphatic hydroxycarboxylic acids 2 to 12 carbon atoms and the aromatic and cycloaliphatic hydroxycarboxylic acids 7 to 14 carbon atoms.

The aliphatic diols can contain 2 to 12 carbon atoms, the cycloaliphatic diol 5 to 8 carbon atoms and the aromatic diols 6 to 16 carbon atoms.

Polyoxyalkylene glycols having molecular weights from 150 to 40000 may also be used.

Aromatic diols are those in which two hydroxyl groups are bound to one or to different aromatic hydrocarbon radicals.

Suitable dicarboxylic acids are linear and branched saturated aliphatic dicarboxylic acids, aromatic dicarboxylic acids and cycloaliphatic dicarboxylic acids.
Suitable aliphatic dicarboxylic acids are those containing 2 to 40 carbon atoms, for example oxalic acid, malonic acid, dimethylmalonic acid, succinic acid, pimelic acid, adipic acid, trimethyladipic acid, sebacic acid, azelaic acid and dimeric acids (dimerisation products of unsaturated aliphatic carboxylic acids such as oleic acid), alkylated malonic and succinic acids such as octadecylsuccinic acid.

Suitable cycloaliphatic dicarboxylic acids are: 1,3-cyclobutanedicarboxylic acid, 1,3-cyclopentanedicarboxylic acid, 1,3- and 1,4-cyclohexanedicarboxylic acid, 1,3- and 1,4-(dicarboxylmethyl)cyclohexane, 4,4'-dicyclohexyldicarboxylic acid.

Suitable aromatic dicarboxylic acids are: In particular terephthalic acid, isophthalic acid, o-phthalic acid, and 1,3-, 1,4-, 2,6- or 2,7-naphthalenedicarboxylic acid, 4,4'-diphenyldicarboxylic acid, 4,4'-diphenylsulfonedicarboxylic acid, 4,4'-benzophenonedicarboxylic acid, 1,1,3-trimethyl-5-carboxyl-3-(p-carboxylphenyl)indane, 4,4'-diphenyl ether dicarboxylic acid, bis-p-(carboxylphenyl)methane or bis-p-(carboxylphenyl)ethane.

The aromatic dicarboxylic acids are preferred, in particular terephthalic acid, isophthalic acid and 2,6-naphthalenedicarboxylic acid.

Other suitable dicarboxylic acids are those containing -CO-NH-groups; they are described in DE-A2414349. Dicarboxylic acids containing N-heterocyclic rings are also suitable, for example those which are derived from carboxylalkylated, carboxylphenylated or carboxybenzylated monoamine-s-triazinedicarboxylic acids (viz. DE-A-2121184 and 2533675), mono- or bishydantoins, optionally halogenated benzimidazoles or parabanic acid. The carboxyalkyl group can in this case contain 3 to 20 carbon atoms.

Suitable aliphatic diols are the linear and branched aliphatic glycols, in particular those containing 2 to 12, preferably 2 to 6, carbon atoms in the molecule, for example: ethylene glycol, 1,2- and 1,3-propylene glycol, 1,2-, 1,3-, 2,3- or 1,4-butanediol, pentyl glycol, neopentyl glycol, 1,6-hexanediol, 1, 12-dodecanediol. A suitable cycloaliphatic diol is e.g. 1,4-dihydroxycyclohexane. Other suitable aliphatic diols are e.g. 1,4-bis(hydroxymethyl)cyclohexane, aromatic-aliphatic diols such as p-xylylene glycol or 2,5-dichloro-p-xylylene glycol, 2,2-(β-hydroxyethoxyphenyl)propane and also polyoxyalkylene glycols such as diethylene glycol, triethylene glycol, polyethylene glycol or polypropylene glycol. The alkylene diols are preferably linear and preferably contain 2 to 4 carbon atoms.

Preferred diols are the alkylenediols, 1,4-dihydroxycyclohexane and 1,4-bis(hydroxymethyl)-cyclohexane. Particularly preferred are ethylene glycol, 1,4-butanediol and 1,2- and 1,3-propylene glycol.

Other suitable aliphatic diols are the β-hydroxyalkylated, in particular β-hydroxyethylated, bisphenols such as 2,2-bis[4'-(β-hydroxyethoxy)phenyl]propane. Other bisphenols will be mentioned later.

Another group of suitable aliphatic diols are the heterocyclic diols described in DE-A-1812003, DE-A-2342432, DE-A-2342372 and DE-A-2453326, for example: N,N'-bis(β-hydroxyethyl)-5,5-dimethylhydantoin, N,N'-bis(β-hydroxypropyl)-5,5-dimethylhydantoin, methylenebis[N-(β-hydroxyethyl)-5-methyl-5-ethylhydantoin], methylenebis[N-(β-hydroxyethyl)-5,5-dimethylhydantoin], N,N'-bis(β-hydroxyethyl)benzimidazolone, N,N'-bis(β-hydroxyethyl)-(tetrachloro)benzimidazolone or N,N'-bis(β-hydroxyethyl)-(tetrabromo)benzimidazolone.

Suitable aromatic diols are mononuclear diphenols and, in particular dinuclear diphenols carrying a hydroxyl group at each aromatic nucleus. Aromatic will be taken to mean preferably hydrocarbonaromatic radicals, such as phenylene or naphthylene. Besides e.g. hydroquinone, resorcinol or 1,5-, 2,6- and 2,7-dihydroxynaphthalene, the bisphenols are to be mentioned in particular, which can be represented by the following formulae:

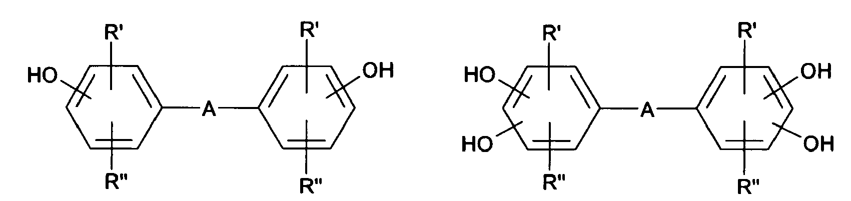

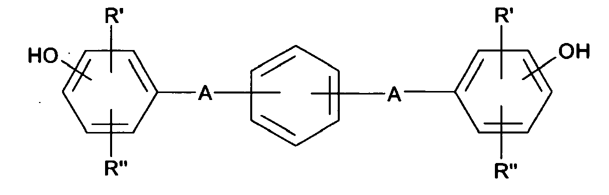

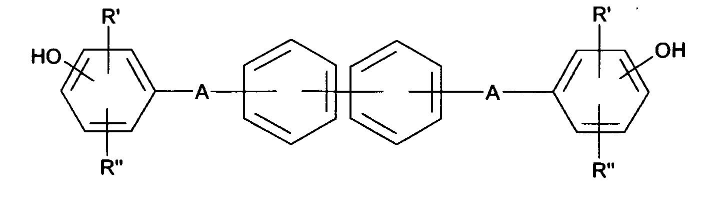

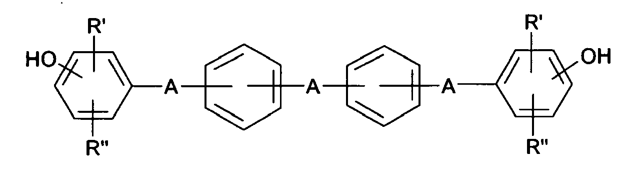

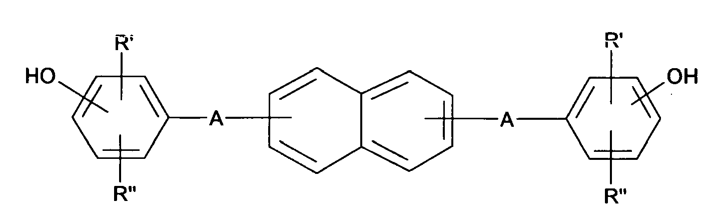

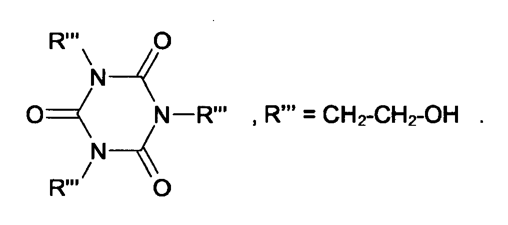

The hydroxyl groups can be in m-position, preferably in p-position, and R' and R" in these formulae can be alkyl containing 1 to 6 carbon atoms, halogen, such as chloro or bromo, and, in particular, hydrogen atoms. A may be a direct bond or -O-, -S-, -(O)S(O)-, -C(O)-, -P(O)(C₁-C₂₀alkyl)-, unsubstituted or substituted alkylidene, cycloalkylidene or alkylene.

Examples of unsubstituted or substituted alkylidene are: ethylidene, 1,1- or 2,2-propylidene, 2,2-butylidene, 1,1-isobutylidene, pentylidene, hexylidene, heptylidene, octylidene, dichloroethylidene, trichloroethylidene.

Examples of unsubstituted or substituted alkylene are methylene, ethylene, phenylmethylene, diphenylmethylene, methylphenylmethylene. Examples of cycloalkylidene are cyclopentylidene, cyclohexylidene, cycloheptylidene and cyclooctylidene.

Examples of bisphenols are: bis(p-hydroxyphenyl) ether or bis(p-hydroxyphenyl) thioether, bis(p-hydroxyphenyl)sulfone, bis(p-hydroxyphenyl)methane, bis(4-hydroxyphenyl)-2,2'-biphenyl, phenylhydroquinone, 1,2-bis(p-hydroxyphenyl)ethane, 1-phenylbis(p-hydroxyphenyl)-ethane, diphenylbis(p-hydroxyphenyl)methane, diphenylbis(p-hydroxyphenyl)ethane, bis(3,5-dimethyl-4-hydroxyphenyl)sulfone, bis(3,5-dimethyl-4-hydroxyphenyl)-p-diisopropylbenzene, bis(3,5-dimethyl-4-hydroxyphenyl)-m-diisopropylbenzene 2,2-bis(3',5'-dimethyl-4'-hydroxyphenyl)propane, 1,1- or 2,2-bis(p-hydroxyphenyl)butane, 2,2-bis(p-hydroxyphenyl)hexafluoropropane, 1,1-dichloro- or 1,1,1-trichloro-2,2-bis(p-hydroxyphenyl)ethane, 1,1-bis(p-hydroxyphenyl)cyclopentane and, in particular, 2,2-bis(p-hydroxyphenyl)propane (bisphenol A) and 1,1-bis(p-hydroxyphenyl)cyclohexane (bisphenol C).
Suitable polyesters of hydroxycarboxylic acids are, for example, polycaprolactone, polypivalolactone or the polyesters of 4-hydroxycyclohexancarboxylic acid, 2-hydroxy-6-naphthalene carboxylic acid or 4-hydroxybenzoic acid.

Other suitable compounds are polymers which may predominantly contain ester bonds or also other bonds, for example polyester amides or polyester imides.
Polyesters containing aromatic dicarboxylic acids have become most important, in particular the polyalkylene terephthalates. Accordingly, those novel moulding compositions are preferred wherein the polyester consists to at least 30 mol%, preferably to at least 40 mol%, of aromatic dicarboxylic acids and to at least 30 mol%, preferably to at least 40 mol%, of alkylenediols containing preferably 2 to 12 carbon atoms, based on the polyester.

In this case the alkylenediol is, in particular, linear and contains 2 to 6 carbon atoms, for example ethylene glycol, tri-, tetra- or hexamethylene glycol and the aromatic dicarboxylic acid, terephthalic acid and/or isophthalic acid.

Particularly suitable polyesters are PET, PBT, PEN, PTT and corresponding copolymers, PET and its copolymer being especially preferred. The process is also particularly important in the case of PET recyclates originating, for example, from bottle collections such as collections of the beverages industry. These materials preferably consist of terephthalic acid, 2,6-naphthalenedicarboxylic acid and/or isophthalic acid in combination with ethylene glycol, diethylene glycol and/or 1,4-bis(hydroxymethyl)cyclohexane.

Polyester blends to be mentioned in particular are those comprising polycarbonate.

Polycarbonate (PC) is understood to mean both virgin polycarbonate and polycarbonate recyclate. PC is obtained, for example, from bisphenol A and phosgene or phosgene analog such as trichloromethylchloroformate, triphosgene or diphenylcarbonate, by condensation in the latter case usually with addition of a suitable transesterification catalyst, for example a boron hydride, an amine, such as 2-methylimidazole or a quaternary ammonium salt; in addition to bisphenol A other bisphenol components may also be used and it is also possible to use halogenated monomers in the benzene nucleus. Particularly suitable bisphenol components to be mentioned are: 2,2-bis(4'-hydroxyphenyl)propane (bisphenol A), 2,4'-dihydroxydiphenylmethane, bis(2-hydroxyphenyl)methane, bis(4-hydroxyphenyl)methane, bis(4-hydroxy-5-propylphenyl)methane, 1,1-bis(4'-hydroxyphenyl)ethane, bis(4-hydroxyphenyl)-cyclohexylmethane, 2,2-bis(4'-hydroxyphenyl)-1-phenylpropane, 2,2-bis(3',5'-dimethyl-4'-hydroxyphenyl)propane, 2,2-bis(3',5'-dibromo-4'-hydroxyphenyl)propane, 2,2-bis(3',5'-dichloro-4'-hydroxyphenyl)propane, 1,1-bis(4'-hydroxyphenyl)cyclododecane, 1,1-bis(3',5'-dimethyl-4'-hydroxyphenyl)cyclododecane, 1,1-bis(4'-hydroxyphenyl)-3,3,5-trimethylcyclohexane, 1,1-bis(4'-hydroxyphenyl)-3,3,5,5-tetramethylcyclohexane, 1,1-bis(4'-hydroxyphenyl)-3,3,5-trimethylcyclopentane and the bisphenols mentioned above. The polycarbonates may also be branched by suitable amounts of more than difunctional monomers (examples as indicated above for the polyesters).

The polyester copolymers or blends, which may be used in the novel process are prepared in customary manner from the starting polymers. The polyester component is preferably PET, PBT, and the PC component is preferably a PC based on bisphenol A. The ratio of polyester to PC is preferably from 95:5 to 5:95, a particularly preferred ratio being that in which one component makes up at least 75%.

It is also possible that the polyesters are branched with small amounts, e.g. from 0.1 to 3 mol%, based on the dicarboxylic acids present, of more than difunctional monomers (e.g. pentaerythritol, trimellitic acid, 1,3,5-tri(hydroxyphenyl)benzene, 2,4-dihydroxybenzoic acid or 2-(4-hydroxyphenyl)-2-(2,4-dihydroxyphenyl)propane).

Further examples of difunctional and more than difunctional monomers are given below.

A useful polyanhydride is for example a polyanhydride which has 2-8 anhydride functions, it being possible for free carboxylic acid groups or carboxylates to be present besides the anhydride functions.

It is preferred to use tetracarboxylic dianhydrides.

Tetracarboxylic dianhydrides, which may be used within the scope of this invention are those of formula 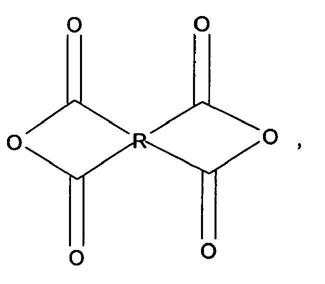 wherein R is C₄-C₂₀alkantetrayl or a radical of formulae (Xa)-(Xj) 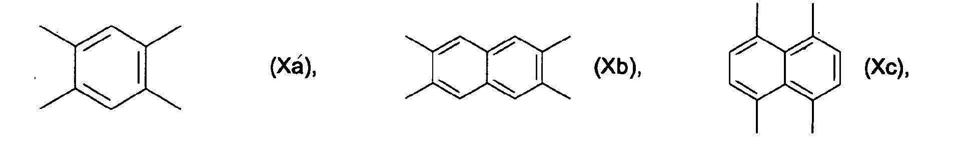 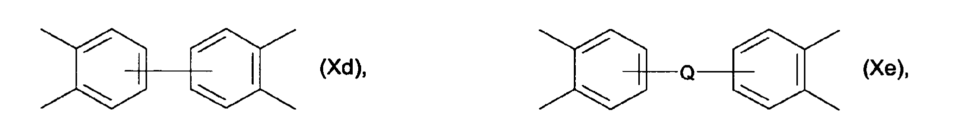 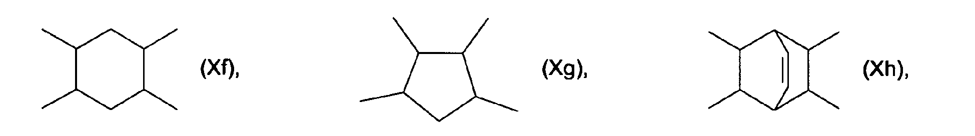 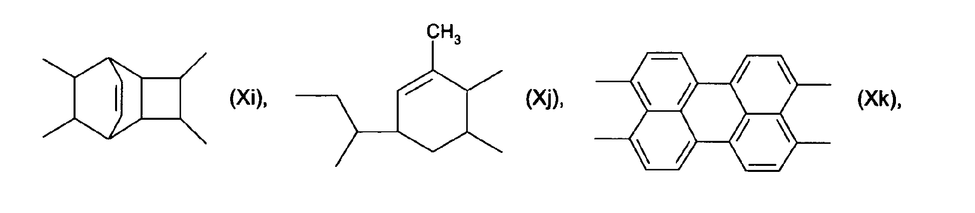 wherein Q is -CH₂-, -CH(CH₃)-, -C(CH₃)₂-, -C(CF₃)₂-, -S-, -O-, -SO₂-, -NHCO-, -CO- or >P(O)(C₁-C₂₀alkyl) and wherein the aromatic rings in the formulae (Va)-(Ve) are unsubstituted or substituted by one or several C₁-C₆alkyl groups, C₁-C₆alkoxy groups or halogen atoms.

If R is an alkanetetrayl radical, then the tetracarboxylic dianhydride may be, for example, butane-1,2,3,4-tetracarboxylic dianhydride.

### Preferred tetracarboxylic dianhydrides are those containing aromatic rings

Particularly preferred are pyromellitic dianhydride, 3,3',4,4'-benzophenonetetracarboxylic dianhydride, 3,3',4,4'-biphenyltetracarboxylic dianhydride and oxydiphthalic dianhydride.

Where appropriate it is also possible to use a blend of tetracarboxylic dianhydrides of different structure.

Individual particularly preferred tetracarboxylic dianhydrides are: pyromellitic dianhydride, benzophenonetetracarboxylic dianhydride, 1,1,2,2-ethanetetracarboxylic dianhydride, 1,2,3,4-cyclopentanetetracarboxylic dianhydride, diphenylsulfonetetracarboxylic dianhydride, 5-(2,5-dioxotetrahydro-3-furanyl)-3-methyl-3 cyclohexane-1,2-dicarboxylic dianhydride, bis-(3,4-dicarbonacidphenyl) ether dianhydride, bis(3,4-dicarboxylic acid phenyl)thioether dianhydride, bisphenol A bisether dianhydride, 2,2-bis(3,4-dicarboxylic phenyl)hexafluoropropane dianhydride, 2,3,6,7-naphthalenetetracarboxylic dianhydride, bis(3,4-dicarboxylic acid phenyl)sulfone dianhydride, 1,2,5,6-naphthalenetetracarboxylic dianhydride, 2,2',3,3'-biphenyltetracarboxylic dianhydride, hydroquinone bisether dianhydride, 3,4,9,10-perylenetetracarboxylic dianhydride, 1,2,3,4-cyclobutanetetracarboxylic dianhydride, 3,4-dicarboxy-1,2,3,4-tetrahydro-1-naphthalenesuccinic dianhydride, bicyclo(2,2)oct-7-ene-2,3,5,6-tetracarboxylic dianhydride, tetrahydrofuran-2,3,4,5-tetracarboxylic dianhydride, 2,2-bis(3,4-dicarboxyphenyl)propane dianhydride, 3,3',4,4'-biphenyltetracarboxylic dianhydride, 4,4'-oxydiphthalic dianhydride (ODPA), ethylenediaminetetracarboxylic dianhydride (DDTAH), or a combination of these dianhydrides.

The polyfunctional compound is for example a polyfunctional hydroxyl compound (polyol), a polyfunctional epoxy compound, a polyfunctional amine compound (polyamine), a polyfunctional aziridine compound (polyaziridine), a polyfunctional isocyanate compound (polyisocyanate), a polyfunctional oxazoline compound (polyoxazoline), a polyfunctional thioalcohol, or a combination of these compounds.

It is preferred to use a polyol consisting of phenols and/or alcohols containing 3-10 free hydroxyl groups, a polythiol consisting of thiophenols and/or thioalcohols containing 3-10 free thiol groups, an aromatic and/or aliphatic polyamine containing 3-10 free amino groups, a polyoxazoline, a polyaziridine or an epoxy compound containing at least two epoxy groups.

Polyfunctional, in particular difunctional, compounds from the class of the epoxides in the sense of this invention may have an aliphatic, aromatic, cycloaliphatic, araliphatic or heterocyclic structure; they contain epoxy groups as side groups or these groups form part of an alicyclic or heterocyclic ring system. The epoxy groups are preferably bound as glycidyl groups via ether or ester bonds to the remaining molecule, or they are N-glycidyl derivatives of heterocyclic amines, amides or imides. Epoxides of this type are commonly known and are commercially available.

The epoxides contain, for example, two epoxy radicals, for example those of formula IV 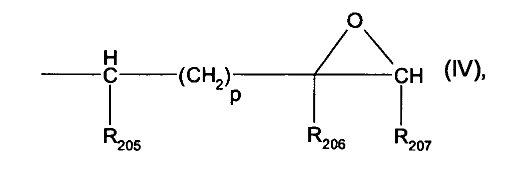 which radicals are directly bound to carbon, oxygen, nitrogen or sulfur atoms, wherein, if R₂₀₅ and R₂₀₇ are hydrogen, R₂₀₆ is hydrogen or methyl and p=0; or, if R₂₀₅ and R₂₀₇ together are -CH₂-CH₂- or -CH₂-CH₂-CH₂- , R₂₀₆ is hydrogen and p=0 or 1.

Examples of epoxides to be mentioned are:
1. Diglycidyl ester and di(β-methylglycidyl)ester obtainable by reacting a compound containing two carboxyl groups in the molecule with epichlorohydrin or glycerol dichlorohydrin or β-methylepichlorohydrin. The reaction is usefully carried out in the presence of bases.
   Compounds containing two carboxyl groups in the molecule may be aliphatic dicarboxylic acids. Examples of these dicarboxylic acids are glutaric acid, adipic acid, pimelic acid, suberic acid, azelaic acid, sebacic acid or dimerised or trimerised linolic acid.
   However, it is also possible to use cycloaliphatic dicarboxylic acids, such as tetrahydrophthalic acid, 4-methyltetrahydrophthalic acid, hexahydrophthalic acid or 4-methylhexahydrophthalic acid.
   Aromatic dicarboxylic acids may also be used, such as phthalic acid or isophthalic acid.
2. Diglycidyl ether or di(β-methylglycidyl)ether obtainable by reacting a compound containing two free alcoholic hydroxyl groups and/or phenolic hydroxyl groups with a suitably substituted epichlorohydrin under alkaline conditions or in the presence of an acid catalyst with subsequent treatment with alkali.
   Ethers of this type are derived, for example, from acyclic alcohols, such as ethylene glycol, diethylene glycol and higher poly(oxyethylene)glycols, propane-1,2-diol, or poly(oxypropylene)glycols, propane-1,3-diol, butane-1,4-diol, poly(oxytetramethylene)glycols, pentane-1,5-diol, hexane-1,6-diol, sorbitol, and from polyepichlorohydrins.
   They are also derived, for example, from cycloaliphatic alcohols such as 1,3- or 1,4-dihydroxycyclohexane, bis(4-hydroxycyclohexyl)methane, 2,2-bis(4-hydroxycydohexyl)propane or 1,1-bis(hydroxymethyl)-cyclohex-3-ene, or they have aromatic nuclei such as N,N-bis(2-hydroxyethyl)aniline or p,p'-bis(2-hydroxyethylamino)diphenylmethane.
   The epoxides can also be derived from mononuclear phenols, for example from resorcinol, pyrocatechol or hydroquinone; or they are based on polynuclear phenols such as on 4,4'-dihydroxybiphenyl, bis(4-hydroxyphenyl)methane, 2,2-bis(4-hydroxyphenyl)propane, 2,2-bis-(3,5-dibromo-4-hydroxyphenyl)propane, 4,4'-dihydroxydiphenylsulfone, 9,9'-bis(4-hydroxyphenyl)fluorene, or on condensates, obtained under acid conditions, of phenols with formaldehyde such as phenol novolaks.
3. Di(N-glycidyl) compounds are obtainable, for example, by dehydrochlorination of the reaction products of epichlorhydrin with amines containing two aminohydrogen atoms. These amines are, for example, aniline, toluidine, n-butylamine, bis(4-aminophenyl)methane, m-xylylenediamine or bis(4-methylaminophenyl)methane.
   The di(N-glycidyl) compounds also include N,N'-diglycidyl derivatives of cycloalkylene ureas, such as ethylene urea or 1,3-propylene urea, and N,N'-diglycidyl derivatives of hydantoins, such as of 5,5-dimethylhydantoin.
4. Di(S-glycidyl) compounds, such as di-S-glycidyl derivatives, which are derived from dithiols, such as ethane-1,2-dithiol or bis(4-mercaptomethylphenyl) ether.
5. Epoxides containing a radical of formula IV, wherein R₂₀₅ and R₂₀₇ together are -CH₂-CH₂- and n is 0, for example bis(2,3-epoxycydopentyl) ether, 2,3-epoxycyclopentyl glycidyl ether or 1,2-bis(2,3-epoxycydopentyloxy)ethane; epoxides containing a radical of formula IV, wherein R₅ and R₇ together are -CH₂-CH₂- and n is 1, for example 3,4-epoxy-6-methylcyclo-hexanecarboxylic acid-(3',4'-epoxy-6'-methylcyclohexyl)methyl ester.

Due to e.g. the process for their preparation, the difunctional epoxides mentioned above can contain minor amounts of mono- or trifunctional components.

Diglycidyl compounds having aromatic structures are mainly used.

Where appropriate, it is also possible to use a blend of epoxides of different structure. On the other hand it is also possible to use tri- and polyfunctional epoxides as supplement in order to obtain branchings, if desired. Such epoxides are, for example, a) liquid diglycidyl ethers of bisphenol A such as Araldit^{®}GY 240, Araldit^{®}GY 250, Araldit^{®}GY 260, Araldit^{®}GY 266, Araldit^{®}GY 2600, Araldit^{®}MY 790; b) solid diglycidyl ethers of bisphenol A such as Araldit^{®}GT 6071, Araldit^{®}GT 7071, Araldit^{®}GT 7072, Araldit^{®}GT 6063, Araldit^{®}GT 7203, Araldit^{®}GT 6064, Araldit^{®}GT 7304, Araldit^{®}GT 7004, Araldit^{®}GT 6084, Araldit^{®}GT 1999, Araldit^{®}GT 7077, Araldit^{®}GT 6097, Araldit^{®}GT 7097, Araldlt^{®}GT 7008, Araldit^{®}GT 6099, Araldit^{®}GT 6608, Araldit^{®}GT 6609, Araldit^{®}GT 6610; c) liquid diglycidyl ethers of bisphenol F such as Araldit^{®}GY 281, Araldit^{®}GY282, Araldit^{®}PY 302, Araldit^{®}PY 306; d) solid polyglycidyl ethers of tetraphenylethane such as CG Epoxy resin^{®}0163; e) solid and liquid polyglycidyl ethers of phenolformaldehyde novolak such as EPN 1138, EPN 1139, GY 1180, PY 307; f) solid and liquid polyglycidyl ethers of o-cresolformaldehyde novolak such as ECN 1235, ECN 1273, ECN 1280, ECN 1299; g) liquid glycidyl ethers of alcohols such as Shell^{®} glycidyl ether 162, Araldit^{®}DY 0390, Aratdit^{®}DY 0391; h) liquid glycidyl esters of carboxylic acids such as Shell^{®}Cardura E terephthalate, trimellitate, Araldit^{®}PY 284 or mixtures of aromatic glycidyl esters such as Araldit^{®}PT 910; i) solid heterocyclic epoxy resins (triglycidyl isocyanurate) such as Araldit^{®}PT 810; j) liquid cycloaliphatic epoxy resins such as Araldit^{®}CY 179; k) liquid N,N,O-triglycidyl ethers of p-aminophenol such as Araldit^{®}MY 0510; l) tetraglycidyl-4-4'-methylenebenzamine or N,N,N',N'-tetraglycidyldiaminophenylmethane such as Araldit^{®}MY 720, Araldit^{®}MY 721.

Particularly preferred difunctional epoxides are diglycidyl ethers based on bisphenols, for example based on 2,2-bis(4-hydroxyphenyl)propane (bisphenol A), bis(4-hydroxyphenyl)-sulfone (bisphenol S), mixtures of bis(ortho/para-hydroxyphenyl)methane (bisphenol F) or Araldit^{®} MT 0163.

Solid epoxides of the diglycidyl ether of bisphenol A type are very particularly preferred, e.g.: Araldit^{®} GT 6071, GT 7071, GT 7072, GT 6097 and GT 6099 or liquid epoxides of the bisphenol F type such as Araldit^{®} GY 281 or PY 306.

Preferably 0.01-5 parts, more preferably 0.02 to 2 parts, most preferably 0.05 to 1 part, of a diepoxide are used, based on 100 parts of polycondensate.

Polyfunctional, in particular trifunctional, compounds from the class of the oxazolines in the sense of this invention are known and are described, inter alia, in EP-A-0583807 and are, for example, compounds of formula V 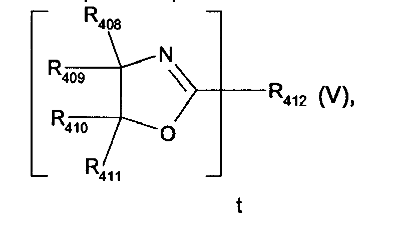 wherein R₄₀₈, R₄₀₉, R₄₁₀ and R₄₁₁ are each independently of one another hydrogen, halogen, C₁-C₂₀alkyl, C₄-C₁₅cycloalkyl, unsubstituted or C₁-C₄alkyl-substituted phenyl; C₁-C₂₀alkoxy or C₂-C₂₀carboxyalkyl,
ift=3,
R₄₁₂ is a trivalent linear, branched or cyclic aliphatic radical containing 1 to 18 carbon atoms which may be interrupted by oxygen, sulfur or 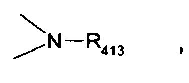 or R₁₂ is also an unsubstituted or C₁-C₄alkyl-substituted benzenetriyl,
ift=2,
R₄₁₂ is a divalent linear, branched or cyclic aliphatic radical containing 1 to 18 carbon atoms which may be interrupted by oxygen, sulfur or 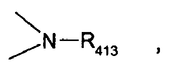 or R₄₁₂ is also an unsubstituted or C₁-C₄alkyl-substituted phenylene, R₄₁₃ is C₁-C₈alkyl, and t is 2 or 3.

Halogen is, for example, fluoro, chloro, bromo or iodo. Chloro is particularly preferred.

Alkyl containing up to 20 carbon atoms is a branched or unbranched radical, for example methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methythexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, eicosyl or docosyl. A preferred meaning of R₈, R₉, R₁₀ and R₁₁ is C₁-C₁₂alkyl, in particular C₁-C₈alkyl, e.g. C₁-C₄alkyl.

C₄-C₁₅Cycloalkyl, in particular C₅-C₁₂cycloalkyl, is e.g. cyclobutyl, cyclopentyl, cyclohexyl, cycloheptyl, cyclooctyl or cyclododecyl. C₅-C₈Cycloalkyl is preferred, in particular cyclohexyl.

C₁-C₄Alkyl-substituted phenyl which preferably contains 1 to 3, more preferably 1 or 2, alkyl groups is, for example, o-, m- or p-methylphenyl, 2,3-dimethylphenyl, 2,4-dimethylphenyl, 2,5-dimethylphenyl, 2,6-dimethylphenyl, 3,4-dimethylphenyl, 3,5-dimethylphenyl, 2-methyl-6-ethylphenyl, 4-tert-butylphenyl, 2-ethylphenyl or 2,6-diethylphenyl.

Alkoxy containing up to 20 carbon atoms is a branched or unbranched radical, for example methoxy, ethoxy, propoxy, isopropoxy, n-butoxy, isobutoxy, pentoxy, isopentoxy, hexoxy, heptoxy, octoxy, decyloxy, tetradecyloxy, hexadecyloxy or octadecyloxy. A preferred meaning of R₈, R₉, R₁₀ and R₁₁ is alkoxy containing 1 to 12, preferably 1 to 8, e.g. 1 to 4, carbon atoms.

Carboxyalkyl containing 2 up to 20 carbon atoms is a branched or unbranched radical, for example carboxymethyl, carboxyethyl, carboxypropyl, carboxybutyl, carboxypentyl, carboxyhexyl, carboxyheptyl, carboxyoctyl, carboxynonyl, carboxydecyl, carboxyundecyl, carboxydodecyl, 2-carboxy-1-propyl, 2-carboxy-1-butyl or 2-carboxy-1-pentyl. A preferred meaning of R₈, R₉, R₁₀ and R₁₁ is C₂-C₁₂carboxyalkyl, in particular C₂-C₈carboxyalkyl, e.g. C₂-C₄carboxyalkyl.

A trivalent linear, branched or cyclic aliphatic radical containing 1 to 18 carbon atoms, which radical may be interrupted by oxygen, sulfur or 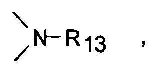 means that the three bonding sites may be at the same atom or at different atoms. Examples thereof are methanetriyl, 1,1,1-ethanetriyl, 1,1,1-propanetriyl, 1,1,1-butanetriyl, 1,1,1-peritanetriyl, 1,1,1-hexanetriyl, 1,1,1-heptanetriyl, 1,1,1-octanetriyl, 1,1,1-nonanetriyl, 1,1,1-decanetriyl, 1,1,1-undecanetriyl, 1,1,1-dodecanetriyl, 1,2,3-propanetriyl, 1,2,3-butanetriyl, 1,2,3-pentanetriyl, 1,2,3-hexanetriyl, 1,1,3-cyclopentanetriyl, 1,3,5-cyclohexanetriyl, 3-oxo-1,1,5-pentanetriyl, 3-thio-1,1,5-pentanetriyl or 3-methylamino-1,1,5-pentanetriyl.

A divalent linear, branched or cyclic aliphatic radical containing 1 to 18 carbon atoms, which radical may be interrupted by oxygen, sulfur or 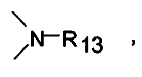 means that the two bonding sites may be at the same atom or at different atoms. Examples thereof are methylene, ethylene, propylene, butylene, pentylene, hexylene, heptylene, octylene, nonylene, decylene, undecylene or dodecylene.

Unsubstituted or C₁-C₄alkyl-substituted benzenetriyl which preferably contains 1 to 3, more preferably 1 or 2, alkyl groups is, for example, 1,2,4-benzenetriyl, 1,3,5-benzenetriyl, 3-methyl-1,2,4-benzoltriyl or 2-methyl-1,3,5-benzenetriyl. 1,2,4-Benzenetriyl and 1,3,5-benzenetriyl are particularly preferred.

Particularly interesting compounds are those of formula V, wherein
R₈, R₉, R₁₀ and R₁₁ are each independently of one another hydrogen or C₁-C₄alkyl, and
R₁₂ is 1,2,4-benzenetriyl or 1,3,5-benzenetriyl.

Especially interesting are compounds of formula V, such as 2,2',2"-(1,3,5-benzoltriyl)-tris-2-oxazoline; 2,2',2"-(1,2,4-benzoltriyl)-tris-4,4-dimethyl-2-oxazoline; 2,2',2"-(1,3,5-benzoltriyl)-tris-4,4-dimethyl-2-oxazoline; 2,2',2"-(1,2,4-benzoltriyl)-tris-5-methyl-2-oxazoline; or 2,2',2"-(1,3,5-benzoltriyl)-tris-5-methyl-2-oxazoline.

Preferred difunctional compounds from the class of the bisoxazolines in the sense of this invention are described by T. Loontjens et al., Makromol. Chem., Macromol. Symp. 75, 211-216 (1993) and are, for example, compounds of formulae

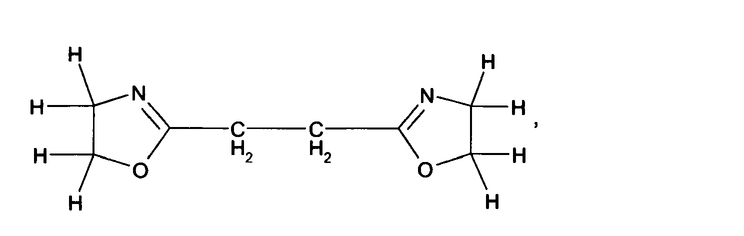

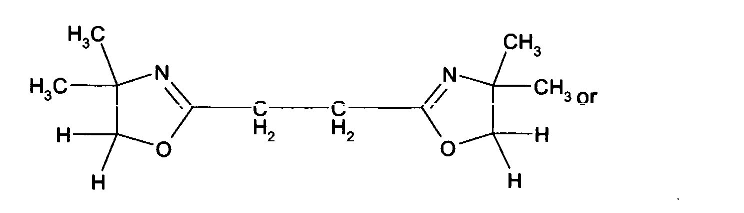

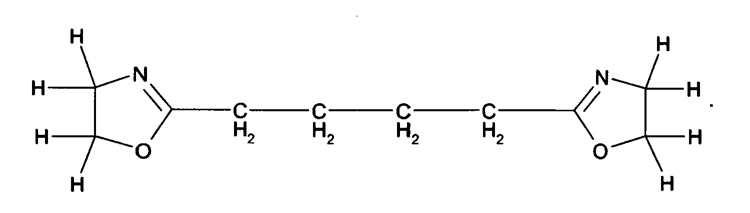

Polyfunctional, in particular difunctional, compounds from the class of the isocyanates in the sense of this invention are known and are, for example, compounds of formula VII

O=C=N-R₂₃-N=C=O (VII),

wherein R₂₃ is C₁-C₂₀alkylene or polymethylene, arylene, aralkylene or cycloalkylene. Preferred diisocyanates are tetramethylenediisocyanate, hexamethylenediisocyanate, dodecamethylenediisocyanate, eicosan-1,20-diisocyanate, 4-butylhexamethylenediisocyanate, 2,2,4- or 2,4,4-trimethylhexamethylenediisocyanate, OCN(CH₂)₂O(CH₂)₂NCO, toluene-2,4-diisocyanate, p-phenylenediisocyanate, xylylenediisocyanate, 3-isocyanatomethyl-3,5,5-trimethylcyclohexylisocyanate, naphthalenediisocyanate, sulfonyldiisocyanate, 3,3'-, 4,4'- and 3,4'-diisocyanates of diphenylmethane, 2,2-diphenylpropane and diphenyl ether, 3,3'-dimethyl-4,4'-diisocyanatodiphenyl, 3,3'-dimethoxy-4,4'-diisocyanatodiphenyl and 4,4'-diisocyanatodiphenylmethane.

The diisocyanates listed above are commercially available or can be prepared from commercially available amines.

It is also possible to use diisocyanate generators, such as polymeric urethanes, uretdion dimers and higher oligomers, cyanurate polymers, urethanes and polymeric urethanes of cyanurate polymers and thermally dissociable adducts of Schiff's bases.

Polyfunctional compounds from the class of the alcohols in the sense of this invention are known and are, for example, pentaerythritol, dipentaerythritol, tripentaerythritol, bistrimethylolpropane, bistrimethylolethane, trismethylolpropane, sorbitol, maltite, isomaltite, lactite, lycasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol or 1-0-α-D-glycopyranosyl-D-mannitoldihydrate, 1,1,1-tris(4-hydroxyphenyl)-ethane, 4,6-dimethyl-2,4,6-tris(4-hydroxyphenyl)heptane, 2,2-bis(4-(4-hydroxyphenyl)cyclohexyl)propane, 1,3,5trihydroxybenzene, 1,2,3-trihydroxybenzene, 1,4-bis(4-hydroxyphenyl)-phenyl)benzene, 2,3,4-trihydroxyacetophenone, 2,3,4-trihydroxybenzoic acid, 2,3,4-trihydroxybenzophenone, 2,4,4'-trihydroxybenzophenone, 2',4',6'-trihydroxy-3-(4-hydroxyphenyl)propiophenone, pentahydroxyflavone, 3,4,5-trihydroxypyrimidine, 3,4,5-trihydroxyphenylmethylamine, tetrahydroxy-1,4-quinonehydrate, 2,2',4,4'tetrahydroxybenzophenone or 1,2,5,8-tetrahydroxyanthraquinone. Pentaerythritol, dipentaerythritol and tris(hydroxyethyl)-isocyanurate are preferred.

Preferably, the polyol is glycerol or pentaerythritol; the epoxy compound is aminophenol triglycidyl ether, trimellitic acid triglycidyl ester or Araldit MT 0163; the oxazoline is 2,2'-bis-(4H-3,1-benzoxazin-4-one), the polyamine is 2-aminomalonamine, 1,2,3-triaminopropane, triaminobenzene, triaminotoluene, triaminoanisole, triaminonaphthalene, triaminopyridine, triaminopyrimidine, tetraaminopyrimidine, tetraaminobenzene, tetraaminodiphenyl, tetra-aminodiphenylsulfone, hexaaminodiphenyl, triamincyclopropane; the polyaziridine is tris[1-(2-methyl)aziridinyl]phosphine oxide, and the polythiol is 1,2,3-trimercaptopropane, trimercaptobenzene or trimercaptoaniline.

This invention is also of interest in the case of polyester recyclates, such as are recovered from production wastes, useful material collections or through so-called obligatory returnables e.g. from the automotive industry or from the electronics area. The polycondensate recyclates are in this case in many ways thermally and/or hydrolytically damaged. These recyclates may additionally also contain subordinate amounts of admixtures of plastics of different structure, for example polyolefins, polyurethanes, ABS or PVC. Furthermore, these recyclates may also contain admixtures owing to standard impurities, such as residues of colourants, adhesives, contact media or paints, traces of metal, water, operating agents, or inorganic salts.

The phosphonates of formula (I) are known and may be prepared according to standard methods, such as for example described in US 4 778 840. However there are further suitable phosphonates, which are listed below.

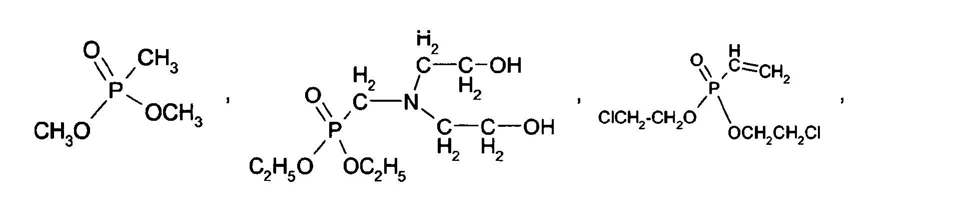

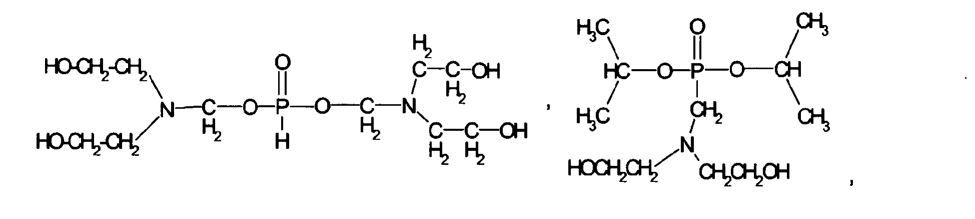

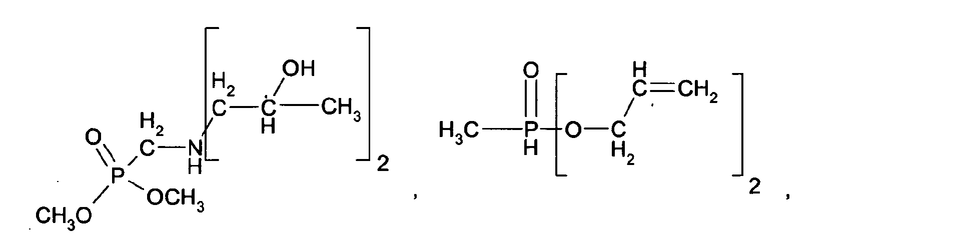

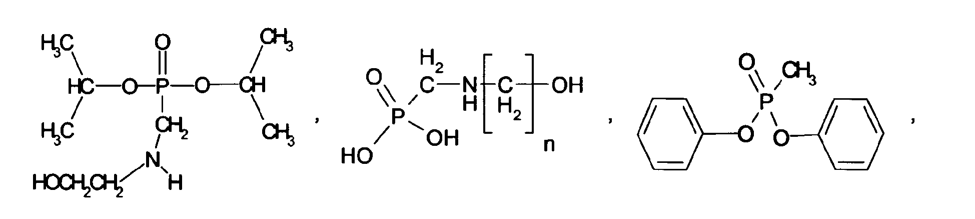

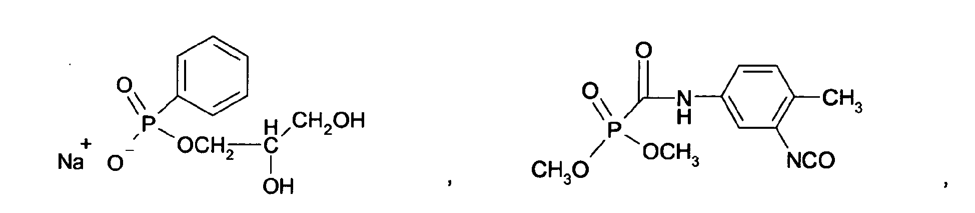

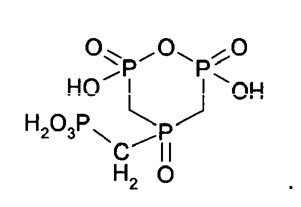

Sterically hindered hydroxyphenylalkylphosphonic acid esters or half-esters, such as those known from US 4 778 840, are particularly preferred.

Examples for the substituents of the compounds of formula (I) are given below.

Halogen is fluoro, chloro, bromo or iodo.

Alkyl substituents containing up to 18 carbon atoms are suitably radicals such as methyl, ethyl, propyl, butyl, pentyl, hexyl and octyl, stearyl and also corresponding branched isomers; C₂-C₄alkyl and isooctyl are preferred.

C₁-C₄Alkyl-substituted phenyl or naphthyl which preferably contain 1 to 3, more preferably 1 or 2, alkyl groups is e.g. o-, m- or p-methylphenyl, 2,3-dimethylphenyl, 2,4-dimethylphenyl, 2,5-dimethylphenyl, 2,6-dimethylphenyl, 3,4-dimethylphenyl, 3,5-dimethylphenyl, 2-methyl-6-ethylphenyl, 4-tert-butylphenyl, 2-ethylphenyl, 2,6-diethylphenyl, 1-methylnaphthyl, 2-methylnaphthyl, 4-methylnaphthyl, 1,6-dimethylnaphthyl or 4-tert-butylnaphthyl.

C₁-C₄Alkyl-substituted cyclohexyl which preferably contains 1 to 3, more preferably 1 or 2, branched or unbranched alkyl group radicals, is e.g. cyclopentyl, methyl cyclopentyl, dimethylcyclopentyl, cyclohexyl, methylcyclohexyl, dimethylcyclohexyl, trimethylcyclohexyl or tertbutylcyclohexyl.

A mono-, di-, tri- or tetra-valent metal cation is preferably an alkali metal, alkaline earth metal, heavy metal or aluminium cation, for example Na⁺, K⁺, Mg⁺⁺, Ca⁺⁺, Ba⁺⁺, Zn⁺⁺, Al⁺⁺⁺, or Ti⁺⁺⁺⁺ Ca⁺⁺ is particularly preferred.
Preferred compounds of formula I are those containing at least one tert-butyl group as R₁ or R₂. Very particularly preferred compounds are those, wherein R₁ and R₂ are at the same time tert-butyl.

n is preferably 1 or 2 and, in particular 1.

For example the phosphonate is of formula Ia 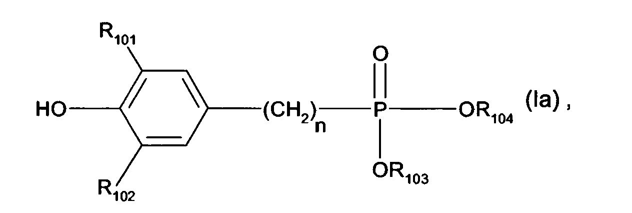 wherein
R₁₀₁ is H, isopropyl, tert-butyl, cyclohexyl, or cyclohexyl which is substituted by 1-3 C₁-C₄alkyl groups,
R₁₀₂ is hydrogen, C₁-C₄alkyl, cyclohexyl, or cyclohexyl which is substituted by 1-3 C₁-C₄alkyl groups,
R₁₀₃ is C₁-C₂₀alkyl, unsubstituted or C₁-C₄alkyl-substituted phenyl or naphthyl,
R₁₀₄ is hydrogen, C₁-C₂₀alkyl, unsubstituted or C₁-C₄alkyl-substituted phenyl or naphthyl; or
M^{r+} / r;
M^{r+} is an r-valent metal cation, r is 1, 2, 3 or 4; and
n is 1,2,3,4,5 or 6.

Preferably the phosphonate is of formula III, IV, V, VI or VII 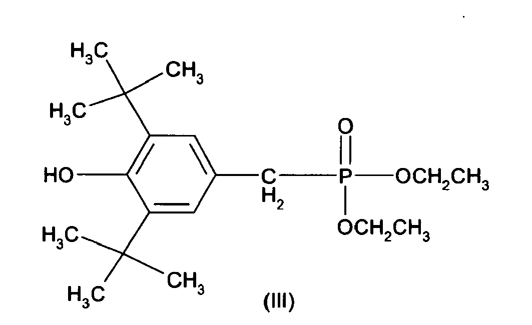 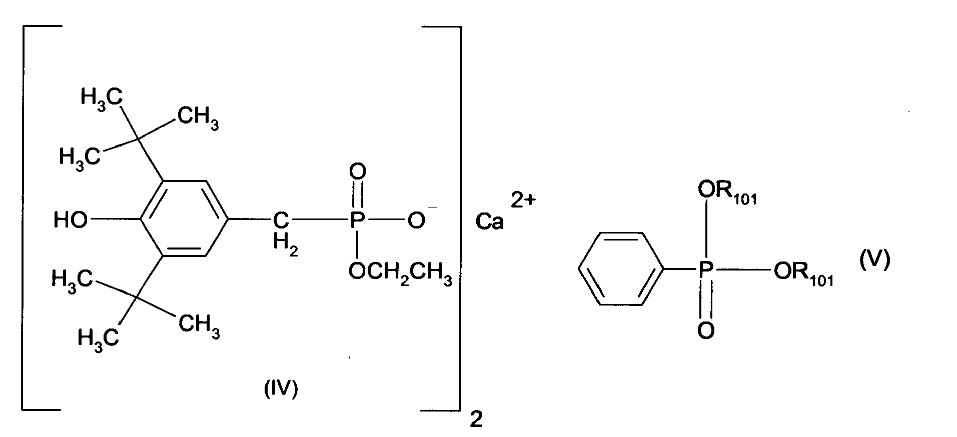 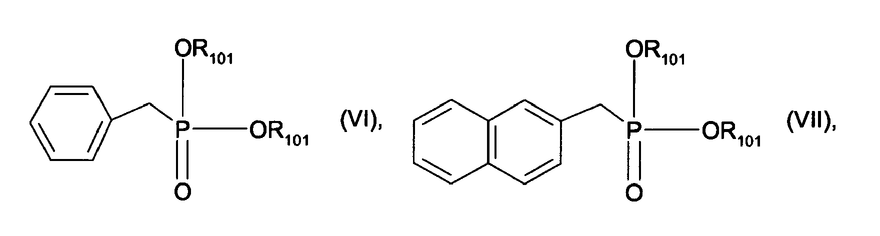 wherein the R₁₀₁ are each independently of one another hydrogen or M^{r+} / r;

In general preferred is a process wherein a compound of formula (I) as component a1) is added.

Specific examples of compounds of formula (I) are of the formula P1 or P2

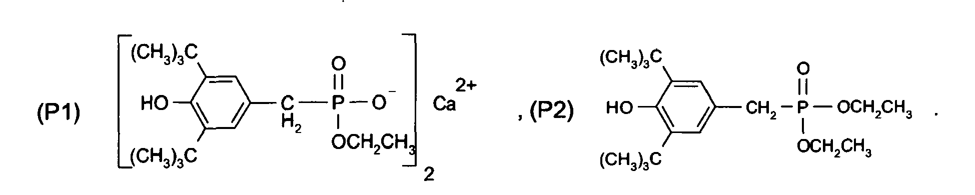

A specific example of a compound of formula (II) is bis(2,4,4-trimethylpentyl)phosphonic acid.

The fluorescent whitening agents of formulae (1)-(8) are in their majority items of commerce or can be prepared as for example described in Fluorescent Whitening Agents, edited by R. Anliker and G. Müller, Georg Thieme, 1975. In particular those of formula (1) can be prepared under known reaction conditions by reacting cyanuric chloride with the corresponding aminostilbenesulfonic acids and an amino compound that is capable of introducing a group R₁, and with a compound that is capable of introducing a group R₂, wherein R₁ and R₂ are as defined above.

The fluorescent whitening agents that can be used advantageously in the present invention are listed by way of example in the following Table 1:

| Table 1: | |
|---|---|
| Compound of formula | |
| (9) | 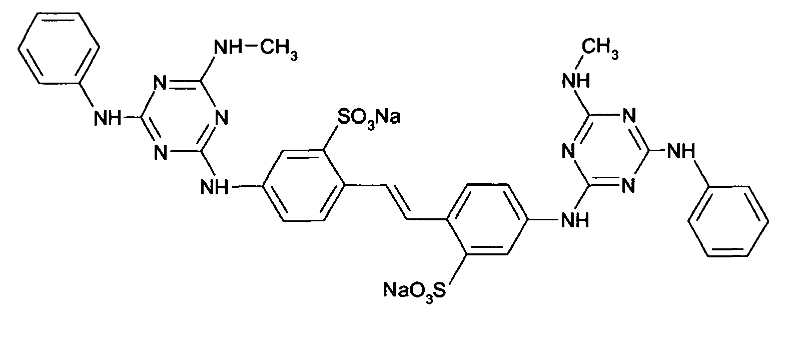 |
| (10) | 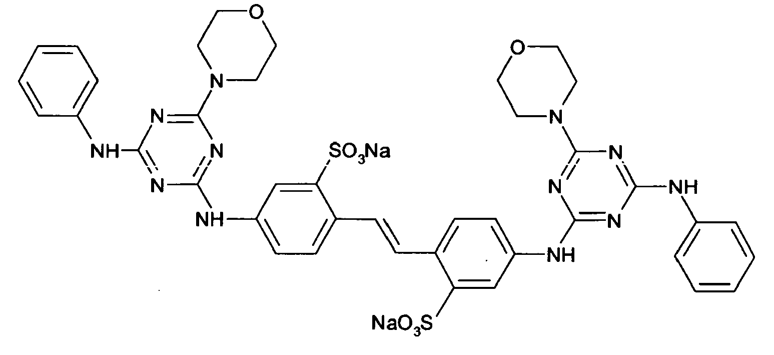 |
| (11 ) | 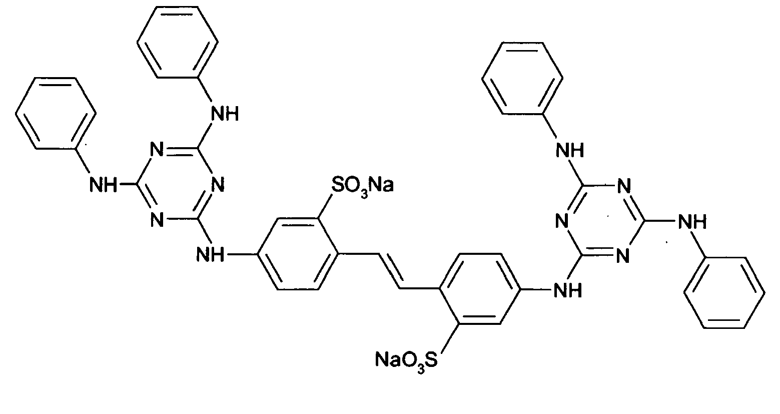 |
| (12) | 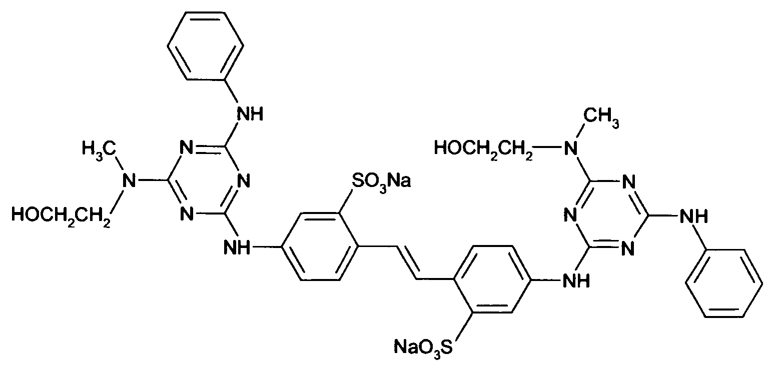 |
| (13) | 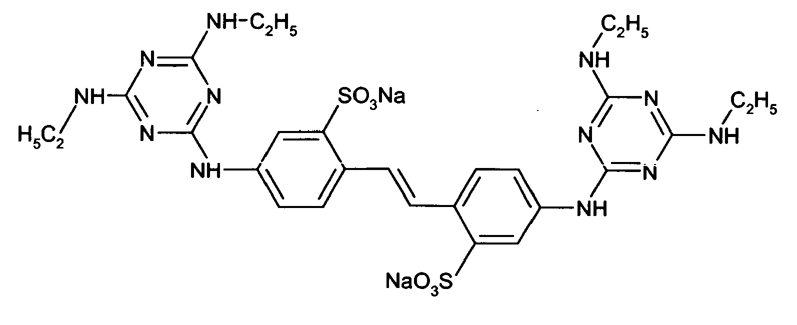 |
| (14) | 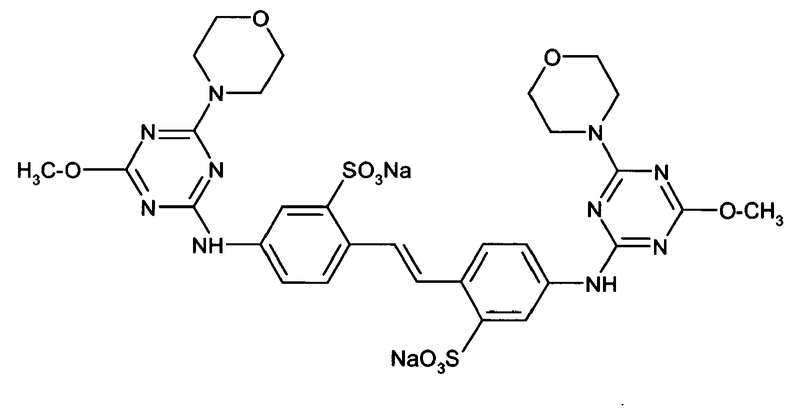 |
| (15) | 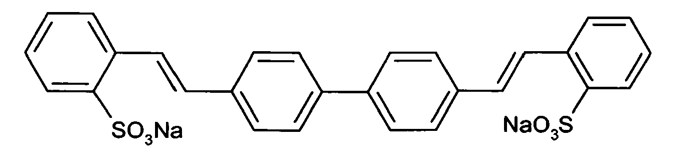 |
| (16) | 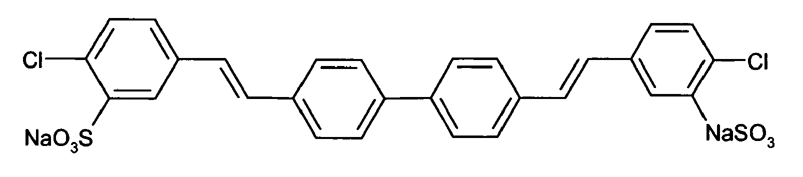 |
| (17) | 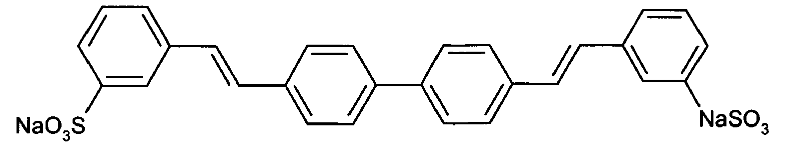 |
| (18) | 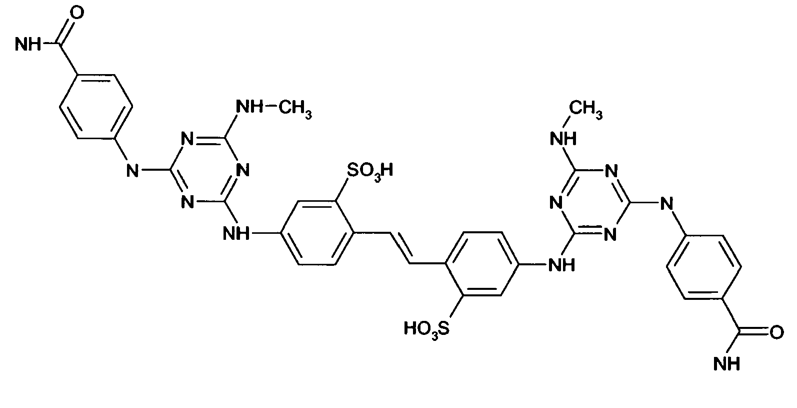 |
| (19) | 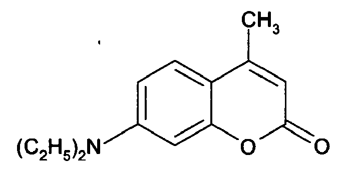 |
| (20) | 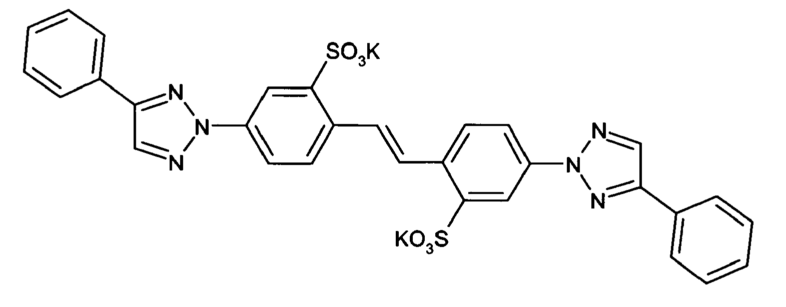 |
| (21) | 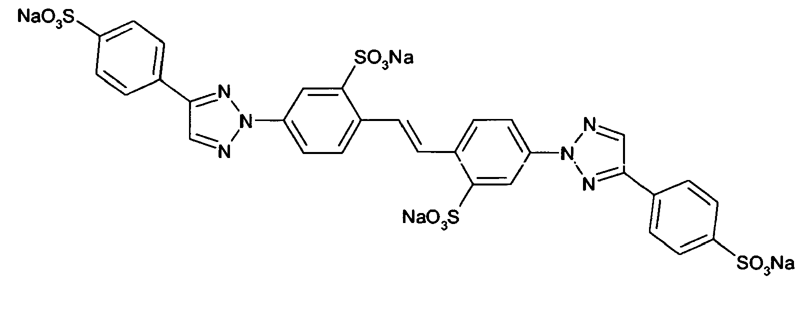 |
| (22) | 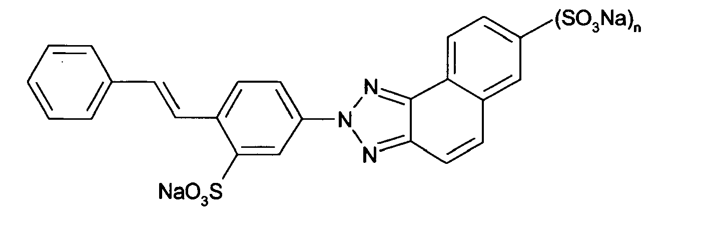 |
| (23) | 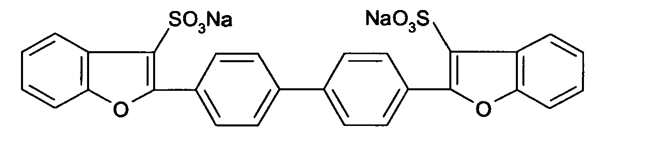 |
| (24) | 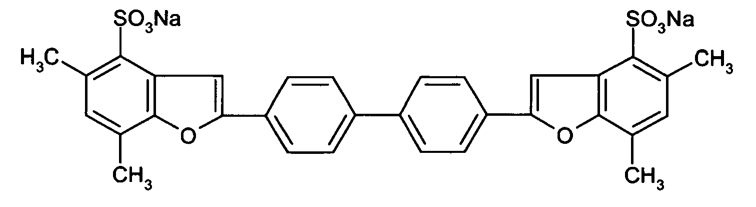 |
| (25) | 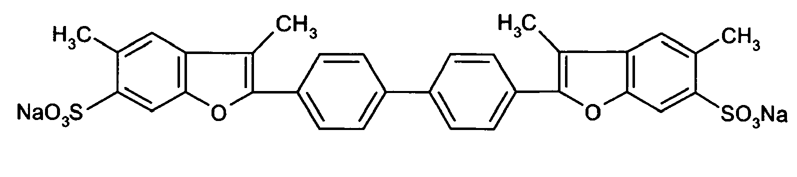 |
| (26) | 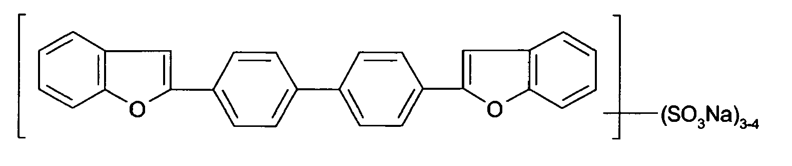 |

Preference is given to a process wherein the compounds of formulae 1-8 are the compounds 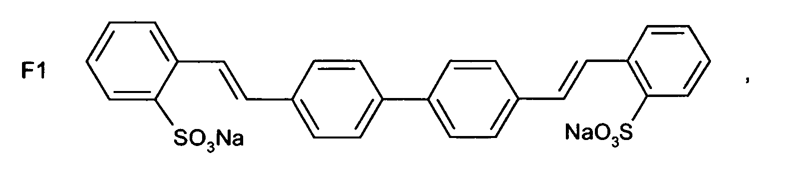 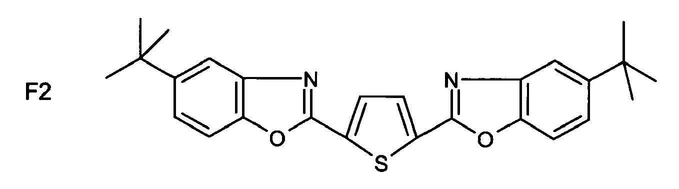 or

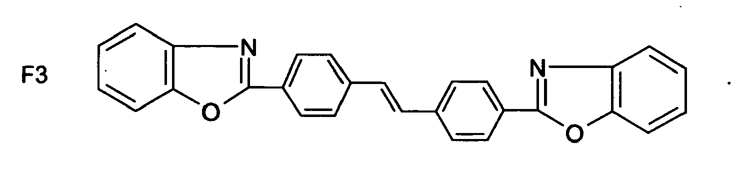

In a specific embodiment of the invention the compounds of formula (I) or (II) are added in an amount from 0.01 to 5%, preferably 0.05 to 1% by weight, based on the weight of the polycondensate.

Particularly preferred are compounds F2 and F3.

For example, the compounds of formulae 1-8 are added in an amount of 0.001 to 0.5%, preferably 0.005 to 0.2% by weight, based on the weight of the polycondensate.

For instance the weight ratio of the compounds according to formula (I) and/or (II) to the compounds of formulae 1-8 is from 50:1 to 1:1.

For example the melt processing is carried out in such a way that the maximum mass-temperature of the melt is from 170° to 320° C.

Processing the polycondensate in the melt means heating above the melting point or glass transition temperature usually carried out, with stirring, until the blend is homogeneous. The temperature depends in this case on the polycondensate used, for example:
- 260 to 290°C for fibre- and film-grade PET
- 270 to 310°C for bottle- and industrial-yarn-grade PET
- 240 to 290°C for PBT
- 170 to 240°C for amorphous PET-grades
- 220 to 280°C for thermoplastic elastomers based on polyesters
- 280 to 320°C for PC
- 270 to 290°C for PA 6.6
- 240 to 270°C for PA 6
The appropriate processing temperature in dependence on type and grade of polycondensates can be found in "Kunststoff Taschenbuch" 21^{th} edition, edited by H. Saechtling, Carl Hanser Verlag 1979."

The incorporation can be carried out in any heatable container equipped with a stirrer, e.g. in a closed apparatus such as a kneader, mixer or stirred vessel. The incorporation is preferably carried out in an extruder or in a kneader. It is immaterial whether processing takes place in an inert atmosphere or in the presence of oxygen.

The addition of the additive or additive blend to the polycondensate can be carried out in all customary mixing machines in which the polycondensate is melted and mixed with the additives. Suitable machines are known to those skilled in the art. They are predominantly mixers, kneaders and extruders.

The process is preferably carried out in an extruder by introducing the additive during processing.

Particularly preferred processing machines are single-screw extruders, contrarotating and corotating twin-screw extruders, planetary-gear extruders, ring extruders or cokneaders. It is also possible to use processing machines provided with at least one gas removal compartment to which a vacuum can be applied.

Suitable extruders and kneaders are described, for example, in *Handbuch der Kunststoffextrusion, Vol. 1 Grundlagen, Editors F. Hensen, W. Knappe, H. Potente, 1989, pp. 3-7, ISBN:3-446-14339-4 (Vol. 2 Extrusionsanlagen 1986, ISBN 3-446-14329-7).*

For example, the screw length is 1 - 60 screw diameters, preferably 35-48 screw diameters. The rotational speed of the screw is preferably 10 - 600 rotations per minute (rpm), very particularly preferably 25 - 300 rpm.

If a plurality of components are added, these can be premixed or added individually.

The additives of the invention and optional further additives or catalysts can be added during any step of the synthesis of the polycondensate, e.g. within initial preparation of the monomer mixture, during formation of oligomers or during melt polycondensation. The additives can be added either as such, or dissolved or dispersed in a liquid or solid medium. The liquid or solid medium can be, for example, monomers or catalysts. The addition can be performed at ambient temperature and pressure, or at temperatures and pressures adjusted to the needs of the production process. In batch processes the additives are advantageously added batch wise, in continuous production processes, the additives can be added in portions of batches or continuously.

The additives of the invention and optional further additives can also be added to the polycondensate in the form of a masterbatch ("concentrate") which contains the components in a concentration of, for example, about 1 % to about 40% and preferably 2 % to about 20 % by weight incorporated in a polycondensate. The polycondensate must not be necessarily of identical structure than the polycondensate where the additives are added finally. In such operations, the polycondensate can be used in the form of powder, granules, solutions, suspensions or in the form of latices.

Incorporation can take place prior to or during the shaping operation, or by applying the dissolved or dispersed compound to the polycondensate, with or without subsequent evaporation of the solvent.

The processing apparatus is preferably a single-screw extruder, twin-screw extruder, planetary-gear extruder, ring extruder or Ko-kneader having optionally one vent zone to which low pressure is applied.

A preferred process is that, which comprises applying an underpressure of less than 250 mbar, particularly preferably of less than 100 mbar and, very particularly preferably, of less than 50 mbar, to the vent zone.

Another preferred process is that, wherein the processing apparatus is a closely intermeshing twin-screw extruder or ring extruder with screws rotating in the same direction and with a feed section, a transition section, at least one vent zone and a metering zone, the vent zone being separated from the transition section or from another vent zone by a fusible plug. This separation via a fusible plug can be effected, for example, by a combination of a kneading element and a return screw element.

The processing apparatus preferably has 1-4 vent zones, particularly preferably 1-3.

The process is usually carried out under normal pressure. Typical processing times are from 10 seconds to 10 minutes.

Another aspect of the invention is a polycondensate obtainable in a process as described above.

Further aspects are a composition comprising a polycondensate and
a1) a compound of formula (I); or
a2) a compound of formula (II); or
a3) a compound of formula (I) and (II) and
b) a compound of formulae 1-8 as described in the process above;
and
the use of a mixture of
a1) a compound of formula (I); or
a2) a compound of formula (II); or
a3) a compound of formula (I) and (II) and
b) a fluorescent whitening agent selected from the group consisting of a compound according to formulae 1-8 or a mixture thereof
for improving color and brightness of a polycondensate during the polycondensation reaction.

It is preferred, that no Al containing condensation catalyst is still present or has been used for the production of the polycondensate.

The definitions and preferences given above for the process apply also for the other aspects of the invention.

Further additives may be present in the polycondensate in addition to the above mentioned novel additive blend. Examples thereof are listed below.
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
   1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.
   1.4. Tocopherols, for example α-tocopherol, β-tocopherol, γ-tocopherol, δ-tocopherol and mixtures thereof (Vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis(2,6-dimethyl-4-hydroxyphenyl)disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis-(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1 -bis-(3,5-dimethyl-2-hydroxyphenyl)butane, 2,2-bis-(3,5-di-tert-butyl-4-hydroxyphenyl)propane, 2,2-bis(5-tert-butyl-4-hydroxy-2-methylphenyl)-4-n-dodecylmercaptobutane, 1,1,5,5-tetra-(5-tert-butyl-4-hydroxy-2-methylphenyl)pentane.
   1.7: O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis-(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-buty)-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Acylaminophenols, for example 4-hydroxylauranilide, 4-hydroxystearanilide, octyl N-(3,5-di-tert-butyl-4-hydroxyphenyl)carbamate.
   1.12. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.13. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.15. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo [2.2.2] octane.
   1.16. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)-hydrazide, N,N'-bis[2-(3-[3,5-di-tert-butyl-4-hydroxyphenyl]propionyloxy)ethyl]oxamide (Naugard^{®}XL-1 supplied by Uniroyal).
   1.17. Ascorbic acid (vitamin C)
   1.18. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenlenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono-and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- und dialkylated tert-butyldiphenylamines, 2,3-dihydro-3,3-dimethyl-4H-1,4-benzothiazine, phenothiazine, a mixture of mono- und dialkylated tert-butyl/tert-octylphenothiazines, a mixture of mono- und dialkylated tert-octyl-phenothiazines, N-allylphenothiazin, N,N,N',N'-tetraphenyl-1,4-diaminobut-2-ene, N,N-bis(2,2,6,6-tetramethyl-piperid-4-yl-hexamethylenediamine, bis(2,2,6,6-tetramethylpiperid-4-yl)sebacate, 2,2,6,6-tetramethylpiperidin-4-one, 2.2.6.6-tetramethyloioeridin-4-ol.
2. UV absorbers and light stabilisers
   2.1. 2-(2'-Hydroxyphenyl) benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5`-(2-methoxycarbonylethyl)-2'-hydroxyphenyl]-2H-benzotriazole with polyethylene glycol 300; 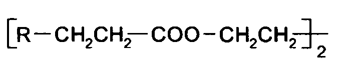 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]-benzotriazole; 2-[2'-hydroxy-3'-(1,1,3,3-tetramethylbutyl)-5'-(α,α-dimethylbenzyl)phenyl]benzotriazole.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, as for example 4-tertbutyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.
   **2.6. Sterically hindered amines,** for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1 -octy)oxy-2,2,6,6-tetramethyl-4-piperidyl)sebacate, bis(1,2,2,6,6-pentamethy)-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl )-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyt-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexamethylenediamine and 4-cyclohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidylyn-dodecylsuccinimid, N-(1,2,2,6,6-pentamethyl-4-piperidyl)-n-dodecylsuccinimid, 2-undecyl-7,7,9,9-tetramethyl-1-oxa-3,8-diaza-4-oxo-spiro[4,5]decane, a reaction product of 7,7,9,9-tetramethyl-2-cycloundecyl-l-oxa-3,8-diaza-4-oxospiro [4,5]decane und epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylenemalonic acid with 1,2,2,6,6-pentamethyl-4-hydroxypiperidine, poly[methylpropyl-3-oxy-4-(2,2,6,6-tetramethyl-4-piperidyl)]siloxane, reaction product of maleic acid anhydride-α-olefin-copolymer with 2,2,6,6-tetramethyl-4-aminopiperidine or 1,2,2,6,6-pentamethyl-4-aminopiperidine.
   2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.
   3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
   4. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
   5. Nitrones, for example, N-benzyl-alpha-phenylnitrone, N-ethyl-alpha-methylnitrone, N-octylalpha-heptylnitrone, N-lauryl-alpha-undecylnitrone, N-tetradecyl-alpha-tridcylnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.
   6. Thiosynergists, for example dilauryl thiodipropionate or distearyl thiodipropionate.
   7. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
   8. Polyamide stabilisers, for example copper salts in combination with iodides and/or phosphorus compounds and salts of divalent manganese.
   9. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zink pyrocatecholate.
   10. Nucleating agents, for example, inorganic substances such as talcum, metal oxides such as titanium dioxide or magnesium oxide, phosphates, carbonates or sulfates of, preferably, alkaline earth metals; organic compounds such as mono- or polycarboxylic acids and the salts thereof, e.g. 4-tert-butylbenzoic acid, adipic acid, diphenylacetic acid, sodium succinate or sodium benzoate; polymeric compounds such as ionic copolymers (ionomers).
   11. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
   12. Other additives, for example, plasticisers, lubricants, emulsifiers, pigments, rheology additives, catalysts, flow control agents, optical brighteners, flameproofing agents, antistatic agents and blowing agents.

Phenolic antioxidants and UV-absorber are preferred.

The following examples illustrate the invention.

### Analytical Procedures:

### Intrinsic Viscosity (I.V.):

According to DIN 53728-3, Edition 1985-01: 1g polymer is dissolved in 100g of a mixture of phenol/di-chloro-benzene (1/1). The viscosity of this solution is measured at 30°C in an Ubelode-viscosimeter and recalculated to the intrinsic viscosity.

### Color:

Color (b, L value of the Yellowness Index) was measured according to ASTM D1925. Following instrument was used: Hunter Lab Scan.

### Materials:

Terephthalic acid
Isophthalic acid
Ethylene glycol

Antimony trioxide as catalyst.

IRGAMOD® 195: a compound according to formula (I), which is a commercial product of Ciba Specialty Chemicals.

Uvitex® OB-One (compound F3)

### PET synthesis:

### General polymerization procedure

1,621.3g ethylene glycol, 3,338.5g terephthalic acid, 66.8g isophthalic acid and 1.3575g antimony trioxide are mixed within a metal container. The mixture is transferred into a 101 reactor (stainless steel) fitted with stirrer, refluxing unit and an outlet-die at the bottom of the reactor. The reactor can be either pressurized with nitrogen up to 6 bars or operated under vacuum down to 1 mbar. The monomer mixture is heated from room temperature to 250°C within 30mins. During heating phase pressure is increased up to 4 bar. A water/ethylene glycol mixture is distilled off for 3.5h. Temperature is increased consecutively to 280°C. Within the next 5h pressure is continuously reduced to further distill off water and ethylene glycol. The polyester product is extruded through the bottom die, cooled to room temperature in a water bath and pelletized to yield clear PET granules.

Typically, by this procedure a PET is synthesized with following properties:
I.V.: 0.75dl/g;
Color: b=4, L=75

### Comparative examples A and B:

The general procedure described above is repeated with the only difference that compounds listed in the following table were added.

| Comp. Ex. No. | Additive |
|---|---|
| A | 500ppm Irgamod 195 |
| B | 100ppm Uvitex OB-One |

The resulting PET shows both better color than PET without Irgamod 195 or Uvitex OB-One.

### Inventive Example 1

The general procedure described above is repeated with the only difference that the compounds listed in the following table were added.

| Example No. | Additive |
|---|---|
| 1 | 400ppm Irgamod 195 + |
| | 80ppm Uvitex OB-One |

The resulting PET, shows significantly less color than the PET resulting from the comparative examples A and B.

The prepared PETs were subjected to an SSP (10h, 220°C within vacuum tumbling dryer) and injection molded into plaques. Color (b* value of the color difference formula) is measured according to ASTM D1925 using a Hunter Lab Scan spectrometer.

| | Additives | Yl | L* | B* |
|---|---|---|---|---|
| Comp. | Without | 5.7 | 75 | 4.0 |
| Comp. A | 500ppm IRGAMOD 195 | 3.9 | 79 | 2.9 |
| Comp. B | 100ppm UVITEX-OB-One | 2.6 | 83 | 3.5 |
| Ex 1 | 400 ppm IRGAMOD 195 | 0.72 | 86 | 0.5 |
| | 80ppm UVITEX-OB-One | | | |

Example 1 shows the best color values in both L^{*}-value and b^{*}-value.

## Claims

1. A process for the preparation of a polycondensate in a condensation reaction of monomers or oligomers or the modification of a polycondensate by melt processing or solid-state polycondensation of the polycondensate, comprising adding during the polycondensation reaction
a1) a compound of formula (I) 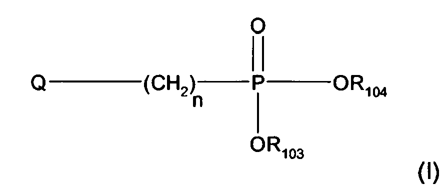 wherein
R₁₀₃ is H, C₁-C₂₀alkyl, unsubstituted or C₁-C₄alkyl-substituted phenyl or naphthyl,
R₁₀₄ is hydrogen, C₁-C₂₀alkyl, unsubstituted or C₁-C₄alkyl-substituted phenyl or naphthyl; or
M^{r+} /r,
M^{r+} is an r-valent metal cation or the ammonium ion,
n is 0, 1, 2, 3, 4, 5 or 6, and
r is 1, 2, 3 or 4;
Q is hydrogen, -X-C(O)-OR₁₀₇, or a radical 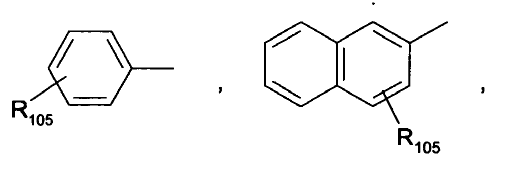 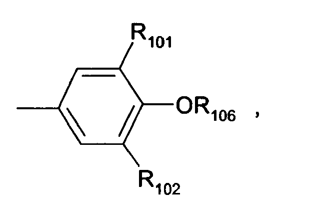
R₁₀₁ is isopropyl, tert-butyl, cyclohexyl, or cyclohexyl which is substituted by 1-3 C₁-C₄alkyl groups,
R₁₀₂ is hydrogen, C₁-C₄alkyl, cyclohexyl, or cyclohexyl which is substituted by 1-3 C₁-C₄alkyl groups,
R₁₀₅ is H, C₁-C₁₈alkyl, OH, halogen or C₃-C₇cycloalkyl;
R₁₀₆ is H, methyl, trimethylsilyl, benzyl, phenyl, sulfonyl or C₁-C₁₈alkyl;
R₁₀₇ is H, C₁-C₁₀alkyl or C₃-C₇cycloalkyl; and
X is phenylene, C₁-C₄alkyl group-substituted phenylene or cyclohexylene; or
a2) a compound of formula (II) 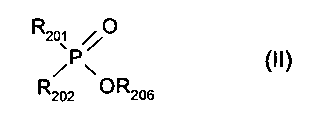 wherein
R₂₀₁ is hydrogen, C₁-C₂₀alkyl, phenyl or C₁-C₄alkyl substituted phenyl; biphenyl, naphthyl, -CH₂-O-C₁-C₂₀alkyl or -CH₂-S-C₁-C₂₀alkyl,
R₂₀₂ is C₁-C₂₀alkyl, phenyl or C₁-C₄alkyl substituted phenyl; biphenyl, naphthyl, -CH₂-O-C₁-C₂₀alkyl or -CH₂-S-C₁-C₂₀alkyl, or R₁ and R₂ together are a radical of the formula III 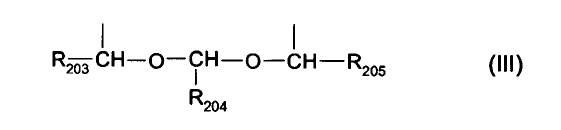 wherein
R₂₀₃, R₂₀₄ and R₂₀₅ independently of each other are C₁-C₂₀alkyl, phenyl or C₁-C₄alkyl substituted phenyl;
R₂₀₆ is hydrogen, C₁-C₁₈alkyl or the ion of an alkali metal or the ammonium ion or
R₂₀₆ is a direct bond, which forms together with R₂₀₂ an aliphatic or aromatic cyclic ester; or
a3) a compound of formula (I) and formula (II); and
b) a fluorescent whitening agent selected from the group consisting of a compound according to formulae 1-8 or a mixture thereof 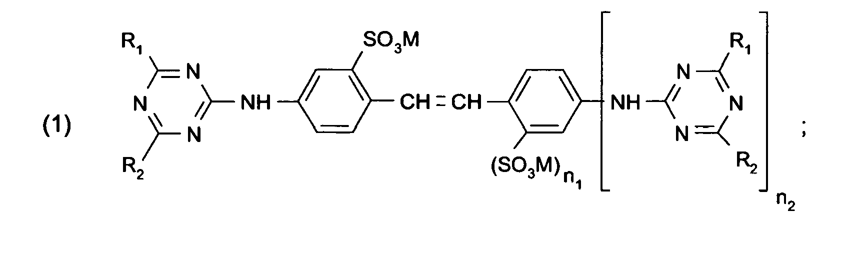 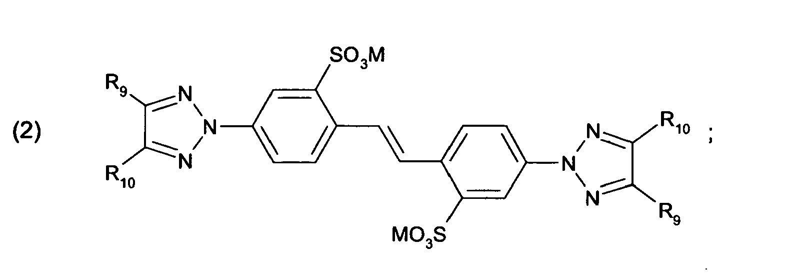 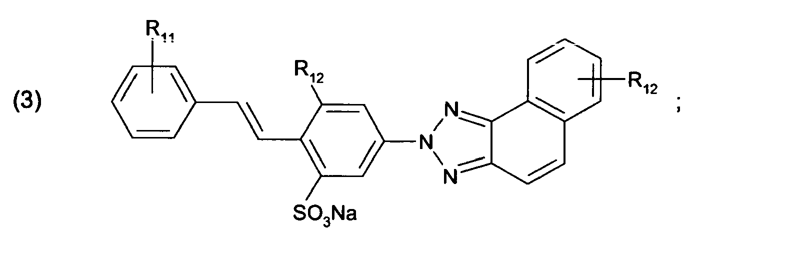 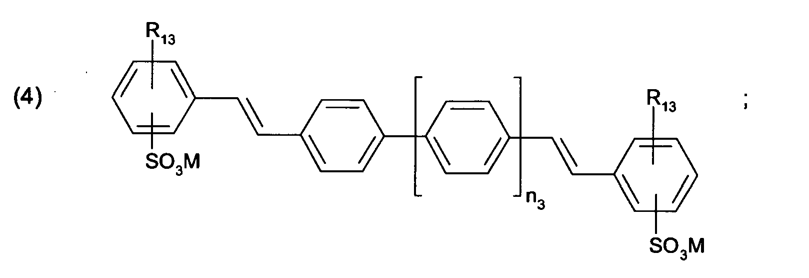 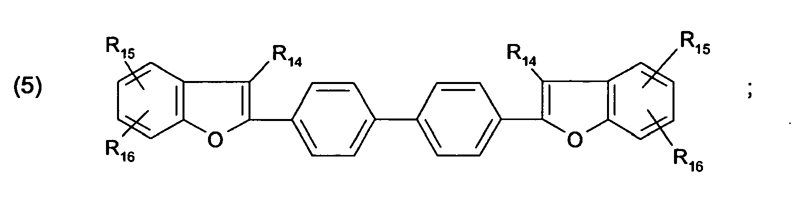 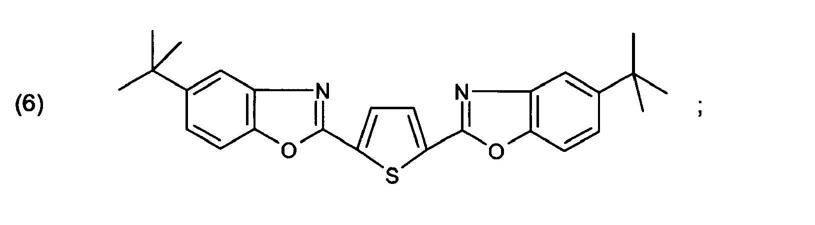 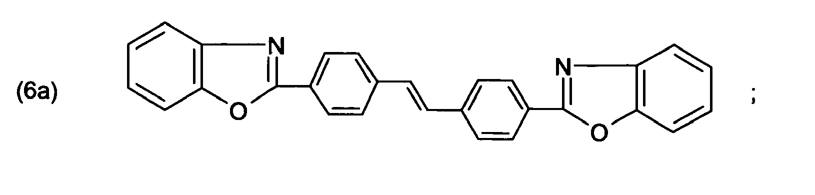 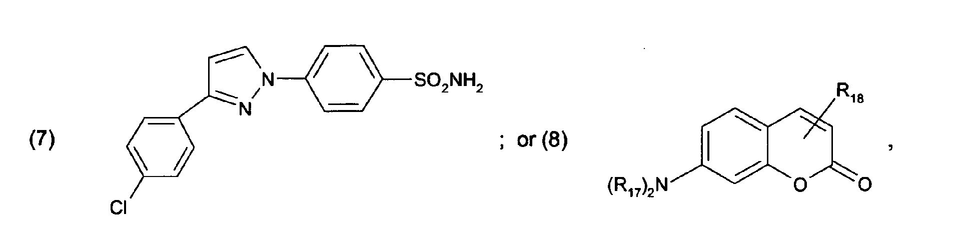 in which formulae
R₁ is a radical of formula 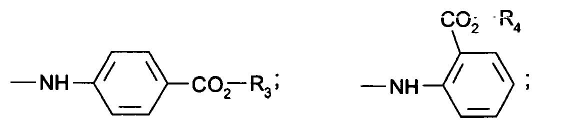 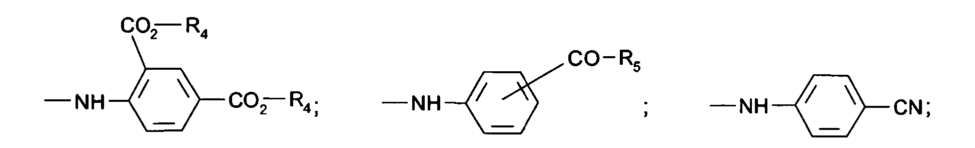 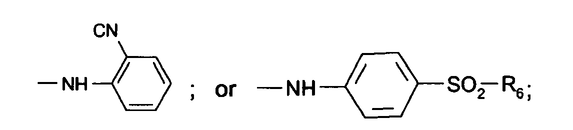
R₃ is an unsubstituted or substituted alkyl or aryl group;
R₄ is M, or an unsubstituted or substituted alkyl or aryl group;
R₅ is hydrogen; an unsubstituted or substituted alkyl or aryl group; or -NR₇R₈, wherein R₇ and R₈ are each independently of the other hydrogen or an unsubstituted or substituted alkyl or aryl group, or R₇ and R₈ together with the nitrogen atom linking them form a heterocyclic radical, especially a morpholino or piperidino radical;
R₆ is hydrogen, or an unsubstituted or substituted alkyl or aryl group;
R₂ is hydrogen; an unsubstituted or substituted alkyl or aryl group; or a radical of formula 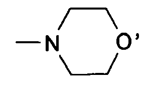 -OH, -NH₂, -N(CH₂CH₂OH)₂, -N[CH₂CH(OH)CH₃]₂, -NH-R₄, -N(R₄)₂ or -OR₄; or
R₁ and R₂ are each independently of the other -OH, -Cl, -NH₂, -O-C₁-C₄alkyl, -O-aryl, -NH-C₁-C₄alkyl, -N(C₁-C₄alkyl)₂, -N(C₁-C₄alkyl)(C₁-C₄hydroxyalkyl), -N(C₁-C₄hydroxyalkyl)_{2'} -NH-aryl, morpholino or -S-C₁-C₄alkyl(aryl);
R₉ and R₁₀ are each independently of the other hydrogen, C₁-C₄alkyl, phenyl or a radical of formula 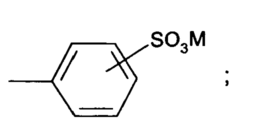
R₁₁ is hydrogen, -Cl or SO₃M;
R₁₂ is -CN, - SO₃M, -S(C₁-C₄alkyl)₂ or -S(aryl)₂;
R₁₃ is hydrogen, -SO₃M, -O-C₁-C₄alkyl, -CN, -Cl, -COO-C₁-C₄alkyl or -CON(C₁-C₄alkyl)₂;
R₁₄ is hydrogen, -C₁-C₄alkyl, -Cl or -SO₃M;
R₁₅ and R₁₆ are each independently of the other hydrogen, C₁-C₄alkyl, -SO₃M, -Cl or -O-C₁-C₄alkyl.
R₁₇ is hydrogen or C₁-C₄alkyl;
R₁₈ is hydrogen, C₁-C₄alkyl, -CN, -Cl, -COO-C₁-C₄alkyl, -CON(C₁-C₄alkyl)_{2'} aryl or -O-aryl;
M is hydrogen, sodium, potassium, calcium, magnesium, ammonium, mono-, di-, tri- or tetra-C₁-C₄alkylammonium, mono-, di- or tri-C₁-C₄hydroxyalkylammonium, or ammonium di- or tri-substituted by a mixture of C₁-C₄alkyl and C₁-C₄hydroxyalkyl groups; and
n₁, n₂ and n₃ are each independently of the others 0 or 1.

2. A process according to claim 1, wherein the polycondensate is polyethylene therephthalate (PET), polybutylene therephthalate (PBT), polyethylenenaphthenate (PEN), a copolyester, PA 6, PA 6,6, a polycarbonate containing bisphenol A, bisphenol Z or bisphenol F linked via carbonate groups.

3. A process according to claim 1, wherein the polycondensate is PBT, PET or a copolymer with PBT or PET.

4. A process according to claim 1, wherein the polycondensate exhibits a L value, which is greater than 80 and a b value which is less than 2, as measured with a spectrometer according to ASTM D1925.

5. A process according to claim 1, wherein a compound of formula (I) as component a1) is added.

6. A process according to claim 5 wherein the compound of formula (I) is of the formula P1 or P2

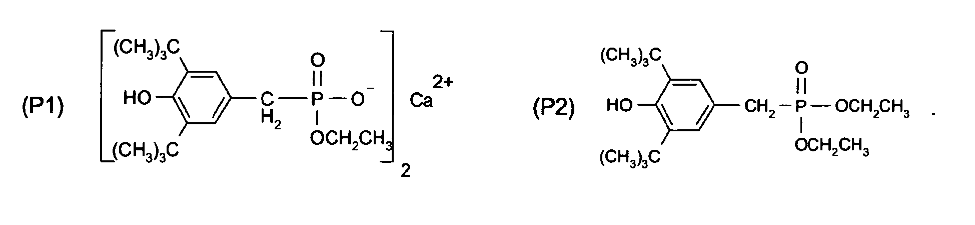

7. A process according to claim 1 wherein the compounds of formulae 1-8 are the compounds 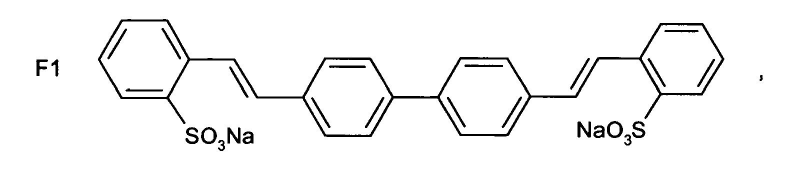 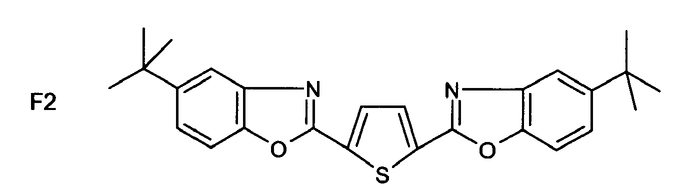 or

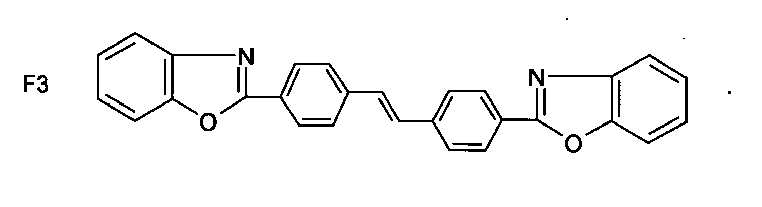

8. A process according to claim 1 wherein the compounds of formula (I) or (II) are added in an amount from 0.01 to 5% by weight, based on the weight of the polycondensate.

9. A process according to claim 1 wherein the compounds of formulae 1-8 are added in an amount of 0.001 to 0.5% by weight, based on the weight of the polycondensate.

10. A process according to claim 1 wherein the weight ratio of the compounds according to formula (I) and (II) to the compounds of formulae 1-8 is from 50:1 to 1:1.

11. A process according to claim 1 wherein additionally a polyanhydride is added, which has 2-8 anhydride functions.

12. A process according to claim 1 wherein a further polyfunctional compound is added, selected from the group consisting of a polyfunctional hydroxyl compound (polyol), a polyfunctional epoxy compound, a polyfunctional amine compound (polyamine), a polyfunctional aziridine compound (polyaziridine), a polyfunctional isocyanate compound (polyisocyanate), a polyfunctional oxazoline compound (polyoxazoline), a polyfunctional thioalcohol, or a combination of these compounds.

13. A polycondensate obtainable in a process according to claim 1.

14. A composition comprising a polycondensate and
a1) a compound of formula (I); or
a2) a compound of formula (II); or
a3) a compound of formula (I) and (II) and
b) a compound of formulae 1-8 according to claim 1.

15. Use of a mixture of
a1) a compound of formula (I); or
a2) a compound of formula (II); or
a3) a compound of formula (I) and (II) and
b) a fluorescent whitening agent selected from the group consisting of a compound according to formulae 1-8 or a mixture thereof
for improving color and brightness of a polycondensate during the polycondensation reaction.

## Patentansprüche

1. Verfahren zur Herstellung eines Polykondensats in einer Kondensationsreaktion von Monomeren oder Oligomeren oder zur Modifikation eines Polykondensats durch Schmelzverarbeiten oder Festkörperpolykondensation des Polykondensats, umfassend das Zugeben während der Polykondensationsreaktion
a1) einer Verbindung der Formel (I) 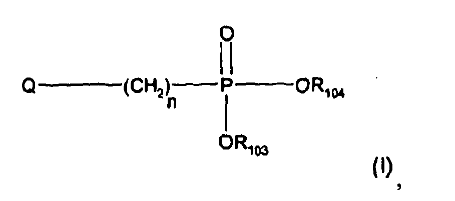 worin
R₁₀₃ H, C₁-C₂₀-Alkyl, unsubstituiertes oder C₁-C₄-Alkyl-substituiertes Phenyl oder Naphthyl ist,
R₁₀₄ Wasserstoff, C₁-C₂₀-Alkyl, unsubstituiertes oder C₁-C₄-Alkyl-substituiertes Phenyl oder Naphthyl oder
M^{r+}/r ist;
M^{r+} ein r-wertiges Metallkation oder das Ammoniumion ist,
n 0, 1, 2, 3, 4, 5 oder 6 ist, und
r 1, 2, 3 oder 4 ist;
Q Wasserstoff, -X-C(O)-OR₁₀₇ oder ein Rest 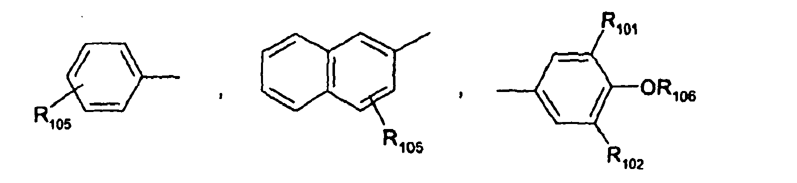 ist,
R₁₀₁ Isopropyl, tert-Butyl, Cyclohexyl oder Cyclohexyl, das durch 1 bis 3 C₁-C₄-AlkylGruppen substituiert ist, ist,
R₁₀₂ Wasserstoff, C₁-C₄-Alkyl, Cyclohexyl oder Cyclohexyl, das durch 1 bis 3 C₁-C₄-AlkylGruppen substituiert ist, ist,
R₁₀₅ H, C₁-C₁₈-Alkyl, OH, Halogen oder C₃-C₇-Cycloalkyl ist;
R₁₀₆ H, Methyl, Trimethylsilyl, Benzyl, Phenyl, Sulfonyl oder C₁-C₁₈-Alkyl ist;
R₁₀₇ H, C₁-C₁₀-Alkyl oder C₃-C₇-Cycloalkyl ist; und
X Phenylen, C₁-C₄-Alkyl-Gruppen-substituiertes Phenylen oder Cyclohexylen ist; oder
a2) einer Verbindung der Formel (II) 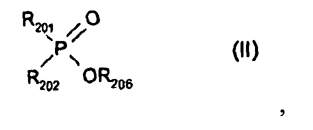 worin
R₂₀₁ Wasserstoff, C₁-C₂₀-Alkyl, Phenyl oder C₁-C₄-Alkyl-substituiertes Phenyl; Biphenyl, Naphthyl, -CH₂-O-C₁-C₂₀-Alkyl oder -CH₂-S-C₁-C₂₀-Alkyl ist,
R₂₀₂ C₁-C₂₀-Alkyl, Phenyl oder C₁-C₄-Alkyl-substituiertes Phenyl; Biphenyl, Naphthyl, -CH₂-O-C₁-C₂₀-Alkyl oder -CH₂-S-C₁-C₂₀-Alkyl ist, oder R₁ und R₂ zusammen ein Rest der Formel III sind 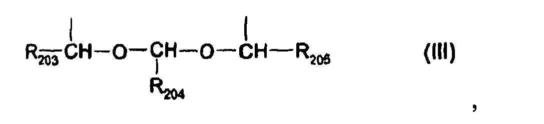 worin
R₂₀₃, R₂₀₄ und R₂₀₅ unabhängig voneinander C₁-C₂₀-Alkyl, Phenyl oder C₁-C₄-Alkylsubstituiertes Phenyl sind;
R₂₀₆ Wasserstoff, C₁-C₁₈-Alkyl oder das Ion eines Alkalimetalls oder das Ammoniumion ist, oder
R₂₀₆ eine direkte Bindung ist, die zusammen mit R₂₀₂ einen aliphatischen oder aromatischen cyclischen Ester bildet; oder
a3) einer Verbindung der Formel (I) und Formel (II); und
b) eines fluoreszierenden Aufhellers, ausgewählt aus der Gruppe, bestehend aus einer Verbindung gemäß den Formeln 1 bis 8 oder einem Gemisch davon, 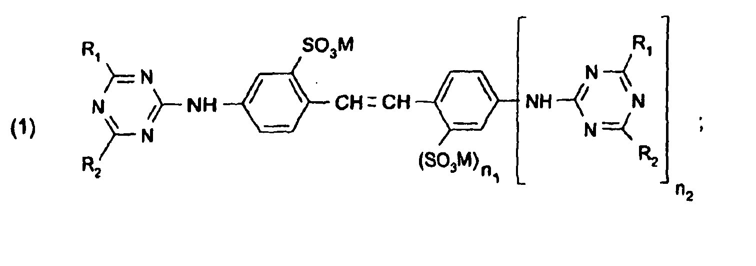 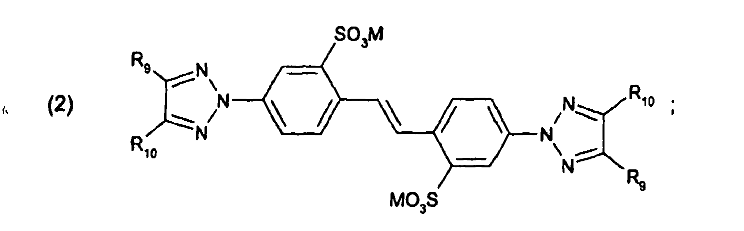 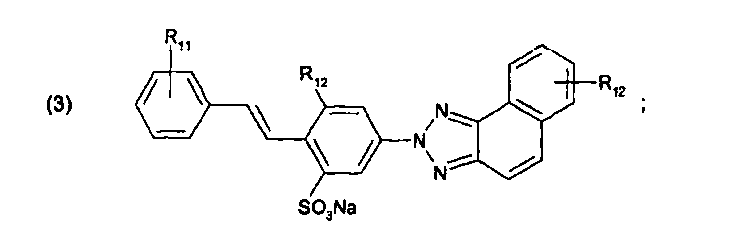 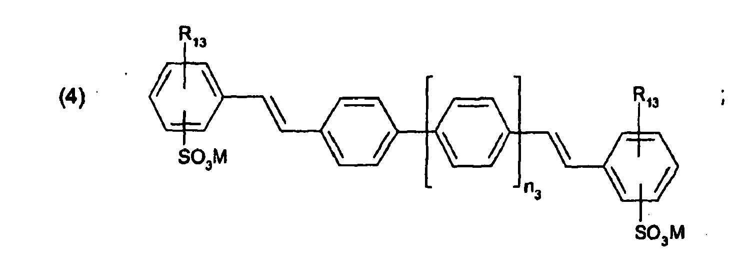 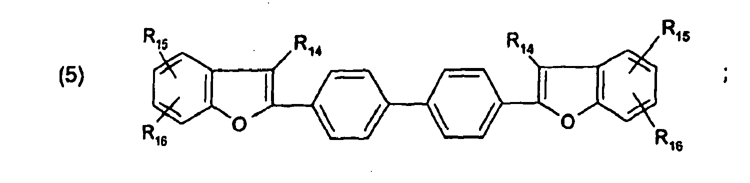 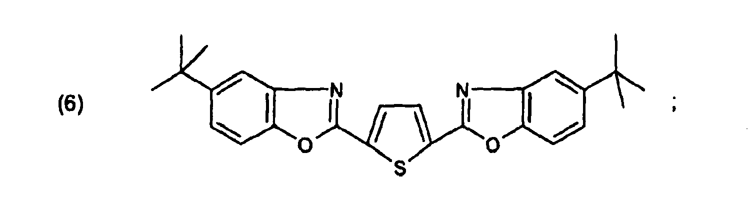 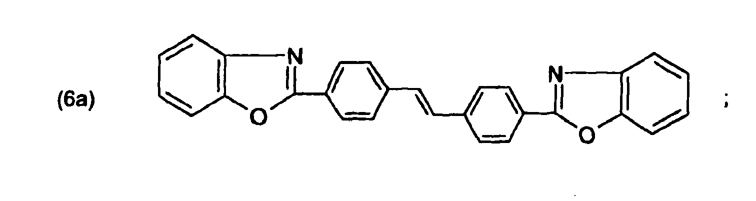 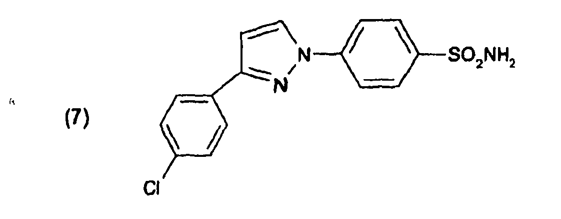 oder 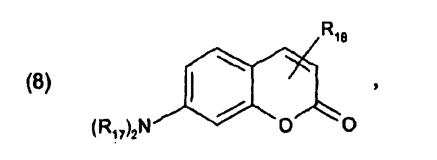 worin in den Formeln
R₁ ein Rest der Formel 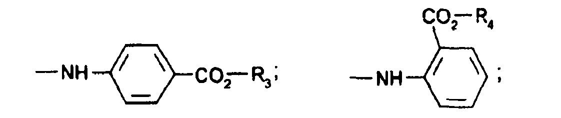 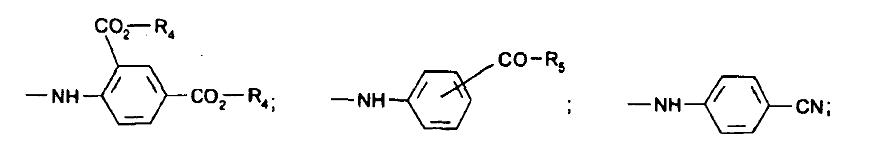 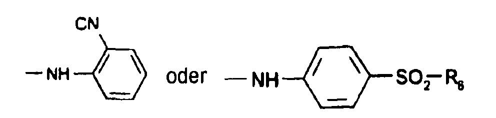 ist;
R₃ eine unsubstituierte oder substituierte Alkyl- oder Arylgruppe ist;
R₄ M oder eine unsubstituierte oder substituierte Alkyl- oder Arylgruppe ist;
R₅ Wasserstoff; eine unsubstituierte oder substituierte Alkyl- oder Arylgruppe; oder -NR₇R₈ ist, worin R₇ und R₈ unabhängig voneinander Wasserstoff oder eine unsubstituierte oder substituierte Alkyl- oder Arylgruppe sind, oder R₇ und R₈ zusammen mit dem Stickstoffatom, das sie verbindet, einen heterocyclischen Rest, speziell einen Morpholino- oder Piperidinorest, bilden;
R₆ Wasserstoff oder eine unsubstituierte oder substituierte Alkyl- oder Arylgruppe ist;
R₂ Wasserstoff; eine unsubstituierte oder substituierte Alkyl- oder Arylgruppe oder ein Rest der Formel 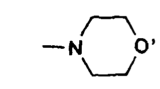 -OH, -NH₂, -N(CH₂CH₂OH)₂, -N[CH₂CH(OH)CH₃]₂, -NH-R₄, -N(R₄)₂ oder -OR₄ ist; oder
R₁ und R₂ unabhängig voneinander -OH, -Cl, -NH₂, -O-C,-C₄-Alkyl, -O-Aryl, -NH-C₁-C₄-Alkyl, -N(C₁-C₄-Alkyl)₂, -N(C,-C₄-Alkyl)(C,-C₄-hydroxyalkyl), -N(C₁-C₄-Hydroxyalkyl)₂, -NH-Aryl, Morpholino oder -S-C₁-C₄-Alkyl(aryl) sind;
R₉ und R₁₀ unabhängig voneinander Wasserstoff, C₁-C₄-Alkyl, Phenyl oder ein Rest der Formel 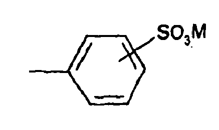 sind;
R₁₁ Wasserstoff, -Cl oder SO₃M ist;
R₁₂ -CN, -SO₃M, -S(C₁-C₄-Alkyl)₂ oder -S(Aryl)₂ ist;
R₁₃ Wasserstoff, -SO₃M, -O-C₁-C₄-Alkyl, -CN, -Cl, -COO-C₁-C₄-Alkyl oder -CON(C₁-C₄-Alkyl)₂ ist;
R₁₄ Wasserstoff, -C₁-C₄-Alkyl, -Cl oder -SO₃M ist;
R₁₅ und R₁₆ unabhängig voneinander Wasserstoff, C₁-C₄-Alkyl, -SO₃M, -Cl oder -O-C₁-C₄-Alkyl sind;
R₁₇ Wasserstoff oder C₁-C₄-Alkyl ist;
R₁₈ Wasserstoff, C₁-C₄-Alkyl, -CN, -Cl, -COO-C₁-C₄-Alkyl, -CON(C₁-C₄-Alkyl)₂, Aryl oder -O-Aryl ist;
M Wasserstoff, Natrium, Kalium, Calcium, Magnesium, Ammonium, mono-, di-, tri- oder tetra-C₁-C₄-Alkylammonium, mono-, di- oder tri-C₁-C₄-Hydroxyalkylammonium oder durch ein Gemisch aus C₁-C₄-Alkyl- und C₁-C₄-Hydroxyalkylgruppen di- oder -tri-substituiertes Ammonium ist; und
n₁, n₂ und n₃ unabhängig voneinander 0 oder 1 sind.

2. Verfahren nach Anspruch 1, wobei das Polykondensat Polyethylenterephthalat (PET), Polybutylentherephthalat (PBT), Polyethylennaphthenat (PEN), ein Copolyester, PA 6, PA 6,6, ein Polycarbonat, enthaltend Bisphenol A, Bisphenol Z oder Bisphenol F, verknüpft über Carbonatgruppen, ist.

3. Verfahren nach Anspruch 1, wobei das Polykondensat PBT, PET oder ein Copolymer aus PBT oder PET ist.

4. Verfahren nach Anspruch 1, wobei das Polykondensat einen L-Wert hat, der größter als 80 ist, und einen a-b-Wert, der weniger als 2 ist, wie mit einem Spektrometer gemäß ASTM D 1925 gemessen.

5. Verfahren nach Anspruch 1, wobei eine Verbindung der Formel (I) als Komponente a1) zugegeben wird.

6. Verfahren nach Anspruch 5, wobei die Verbindung der Formel (I) die Formel P1 oder P2 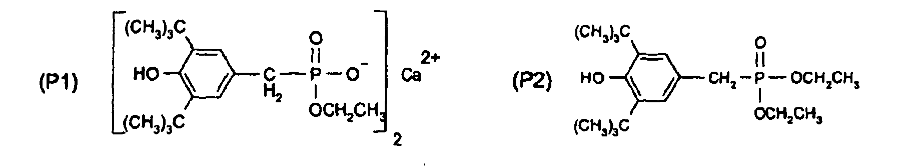 aufweist.

7. Verfahren nach Anspruch 1, wobei die Verbindungen der Formeln 1 bis 8 die Verbindungen 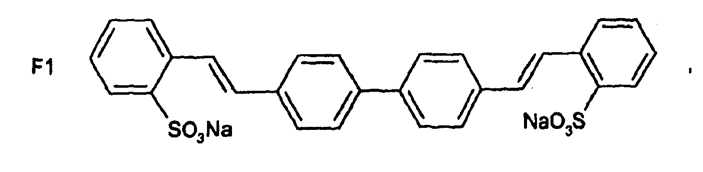 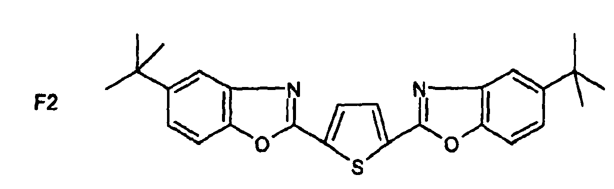 oder 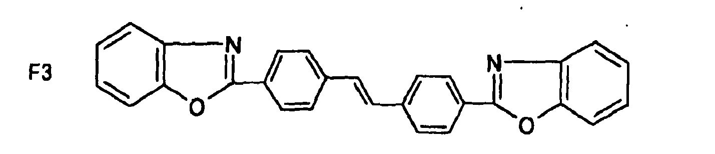 sind.

8. Verfahren nach Anspruch 1, wobei die Verbindungen der Formel (I) oder (II) in einer Menge von 0,01 bis 5 Gew.-%, bezogen auf das Gewicht des Polykondensats, zugegeben werden.

9. Verfahren nach Anspruch 1, wobei die Verbindungen der Formeln 1 bis 8 in einer Menge von 0,001 bis 0,5 Gew.-%, bezogen auf das Gewicht des Polykondensats, zugegeben werden.

10. Verfahren nach Anspruch 1, wobei das Gewichtsverhältnis der Verbindungen gemäß Formel (I) und (II) zu den Verbindungen der Formeln 1 bis 8 50 : 1 bis 1 : 1 beträgt.

11. Verfahren nach Anspruch 1, wobei außerdem ein Polyanhydrid zugegeben wird, das 2 bis 8 Anhydridfunktionen hat.

12. Verfahren nach Anspruch 1, wobei eine weitere polyfunktionelle Verbindung zugegeben wird, ausgewählt aus der Gruppe, bestehend aus einer polyfunktionellen Hydroxylverbindung (Polyol), einer polyfunktionellen Epoxyverbindung, einer polyfunktionellen Aminverbindung (Polyamin), einer polyfunktionellen Aziridinverbindung (Polyaziridin), einer polyfunktionellen Isocyanatverbindung (Polyisocyanat), einer polyfunktionellen Oxazolinverbindung (Polyoxazolin), einem polyfunktionellen Thioalkohol oder einer Kombination aus diesen Verbindungen.

13. Polykondensat, erhältlich durch das Verfahren nach Anspruch 1.

14. Zusammensetzung, umfassend ein Polykondensat und
a1) eine Verbindung der Formel (I) oder
a2) eine Verbindung der Formel (II) oder
a3) eine Verbindung der Formel (I) und (II) und
b) eine Verbindung der Formeln 1 bis 8 nach Anspruch 1.

15. Verwendung eines Gemisches aus
a1) einer Verbindung der Formel (I) oder
a2) einer Verbindung der Formel (II) oder
a3) einer Verbindung der Formel (I) und (II) und
b) einem fluoreszierenden Aufheller, ausgewählt aus der Gruppe, bestehend aus einer Verbindung gemäß den Formeln 1 bis 8 oder einem Gemisch davon,
zur Verbesserung der Farbe und Helligkeit eines Polykondensats während der Polykondensationsreaktion.

## Revendications

1. Procédé de préparation d'un polycondensat dans une réaction de condensation de monomères ou d'oligomères ou de modification d'un polycondensat par transformation à l'état fondu ou par polycondensation à l'état solide du polycondensat, comprenant l'adjonction au cours de la réaction de polycondensation
a1) d'un composé de formule (1) 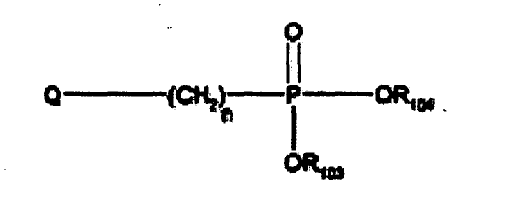 (I) dans laquelle
R₁₀₃ est H, un groupe alkyle en C₁ à C₂₀, un groupe phényle ou naphtyle non substitué ou substitué par un groupe alkyle en C₁ à C₄,
R₁₀₄ est un atome d'hydrogène, un groupe alkyle en C₁ à C₂₀, un groupe phényle ou naphtyle non substitué ou substitué par un groupe alkyle en C₁ à C₄ ou M^{r+}/r,
M^{r+}/r est un cation métallique r-valent ou l'ion ammonium,
n vaut 0, 1, 2, 3, 4, 5 ou 6, et
r vaut 1, 2, 3 ou 4;
Q est un atome d'hydrogène, -X-C(O)-OR₁₀₇, ou un radical 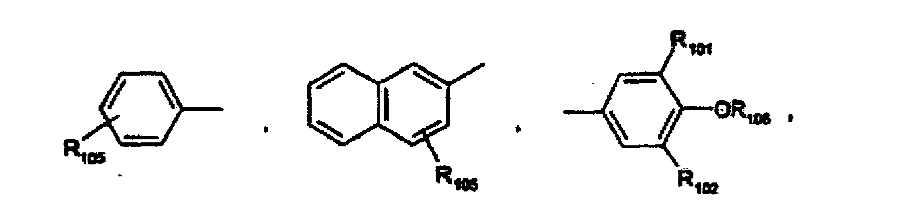
R₁₀₁ est un groupe isopropyle, un groupe tertiobutyle, un groupe cyclohexyle, ou un groupe cyclohexyle qui est substitué par 1 à 3 groupes alkyle en C₁ à C₄,
R₁₀₂ est un atome d'hydrogène, un groupe alkyle en C₁ à C₄, un groupe cyclohexyle, ou un groupe cyclohexyle qui est substitué par 1 à 3 groupes alkyle en C₁ à C₄,
R₁₀₅ est H, un groupe alkyle en C₁ à C₁₈, OH, un groupe halogène ou un groupe cycloalkyle en C₃ à C₇;
R₁₀₆ est H, un groupe méthyle, un groupe triméthylsilyle, un groupe benzyle, un groupe phényle, un groupe sulfonyle ou un groupe alkyle en C₁ à C₁₈,
R₁₀₇ est H, un groupe alkyle en C₁ à C₁₀ ou un groupe cycloalkyle en C₃ à C₇; et
X est un groupe phénylène, un groupe phénylène ou cyclohexylène substitué par un groupe alkyle en C₁ à C₄, ou
a2) d'un composé de formule (II) 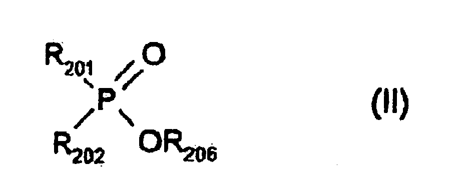 dans laquelle
R₂₀₁ est un atome d'hydrogène, un groupe alkyle en C₁ à C₂₀, un groupe phényle ou un groupe phényle substitué par un groupe alkyle en C₁ à C₄, un groupe biphényle, un groupe naphtyle, un groupe - CH₂-O-alkyle en C₁ à C₂₀ ou un groupe -CH₂-S-alkyle en C₁ à C₂₀,
R₂₀₂ est un groupe alkyle en C₁ à C₂₀, un groupe phényle ou un groupe phényle substitué par un groupe alkyle en C₁ à C₄, un groupe biphényle, un groupe naphtyle, un groupe -CH₂-O-alkyle en C₁ à C₂₀ ou un groupe -CH₂-S-alkyle en C₁ à C₂₀, ou bien R₁ et R₂ forment conjointement un radical de formule III 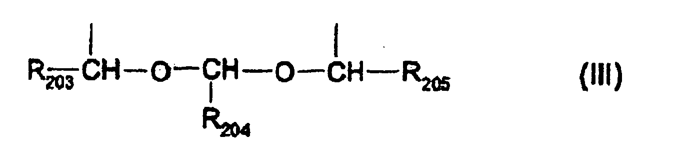 dans laquelle
R₂₀₃, R₂₀₄ et R₂₀₅ sont chacun indépendamment l'un de l'autre un groupe alkyle en C₁ à C₂₀, un groupe phényle ou un groupe phényle substitué par un groupe alkyle en C₁ à C₄,
R₂₀₆ est un atome d'hydrogène, un groupe alkyle en C₁ à C₁₈ ou l'ion d'un métal alcalin ou l'ion ammonium ou bien
R₂₀₆ est une liaison directe, qui forme conjointement avec R₂₀₂ un ester aliphatique ou cycloaromatique; ou
a3) d'un composé de formule (I) et de formule (II) ; et
b) d'un agent de blanchiment optique fluorescent choisi dans le groupe constitué par un composé selon les formules 1 à 8 ou un mélange de ceux-ci 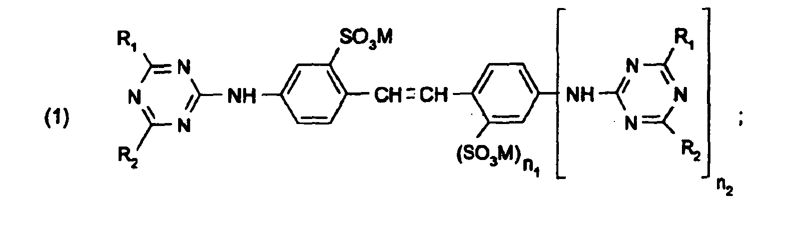 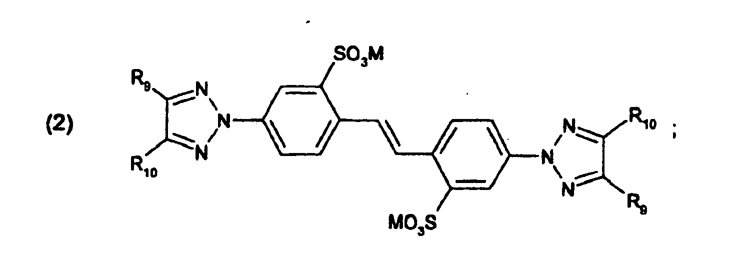 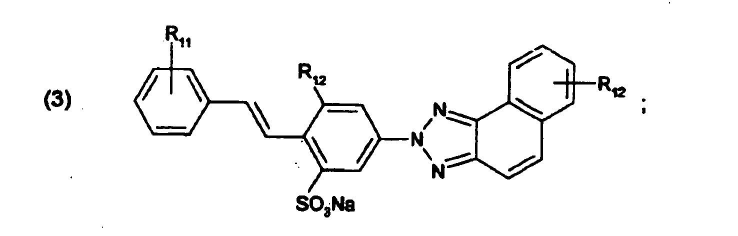 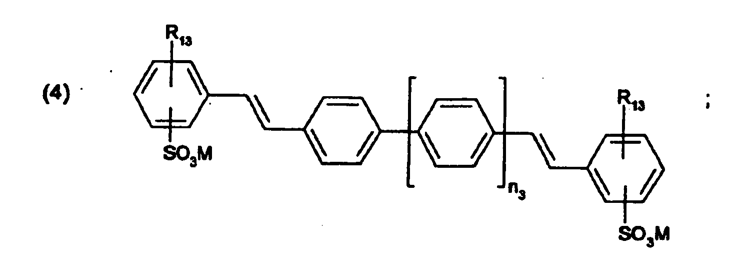 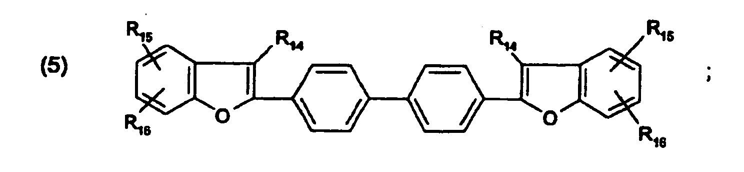 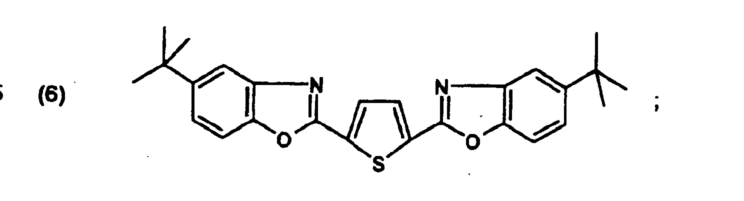 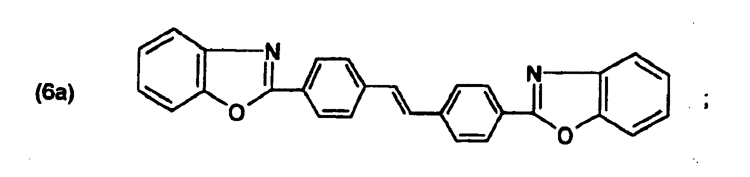 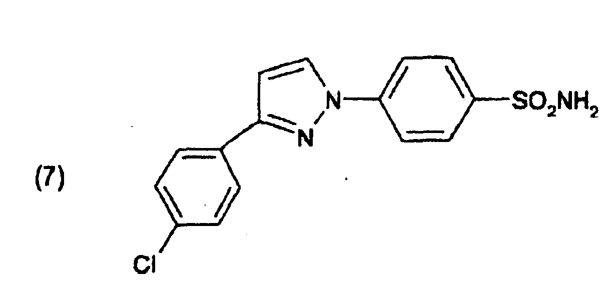 ou 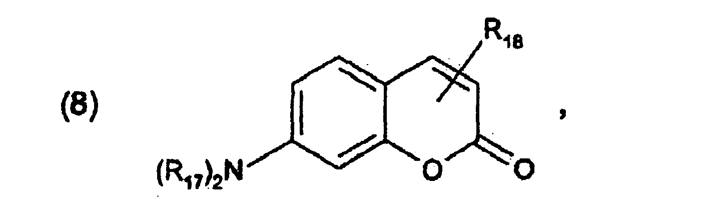 formules dans lesquelles
R₁ est un radical de formule 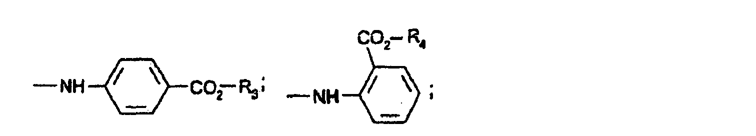 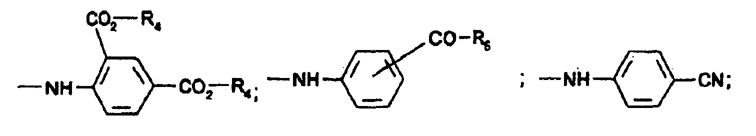 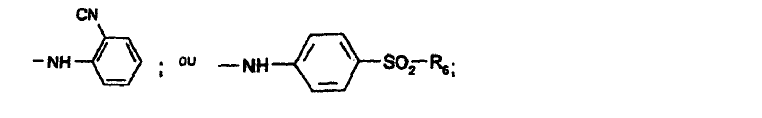
R₃ est un groupe alkyle ou aryle substitué ou non substitué;
R₄ est M, ou un groupe alkyle ou aryle substitué ou non substitué;
R₅ est un atome d'hydrogène, un groupe alkyle ou aryle substitué ou non substitué; ou -NR₇R₈, où R₇ et R₈ forment chacun indépendamment l'un de l'autre un atome d'hydrogène ou un groupe alkyle ou aryle substitué ou non substitué, ou bien R₇ et R₈ forment conjointement avec l'atome d'azote auquel ils sont liés un radical hétérocyclique, notamment un radical morpholino ou pipéridino;
R₆ est un atome d'hydrogène, un groupe alkyle ou aryle substitué ou non substitué;
R₂ est un atome d'hydrogène, un groupe alkyle ou aryle substitué ou non substitué; ou un radical de formule 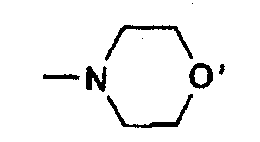 -OH, -Cl, -NH₂, -(NH₂CH₂OH)₂, -N[CH₂CH(OH)CH₃]₂, -NH-R₄, -NH-R₄, -NH-R₄, -N(R₄) ou -OR₄; ou bien
R₁ et R₂ sont chacun indépendamment l'un de l'autre -OH, -Cl, - NH₂, un groupe -O-alkyle en C₁ à C₄, un groupe -O-aryle, un groupe -NH-alkyle en C₁ à C₆, un groupe -N(alkyle en C₁ à C₄), un groupe - N(alkyl en C₁ à C₄)(hydroxyalkyle en C₁ à C₄), un groupe - N(hydroxyalkyle en C₁ à C₄)₂, un groupe -NH-aryle, un groupe morpholino ou un groupe -S-alkyl (en C₁ à C₄) (aryle);
R₉ et R₁₀ sont chacun indépendamment l'un de l'autre un atome d'hydrogène, un groupe alkyle en C₁ à C₄, un groupe phényle ou un radical de formule 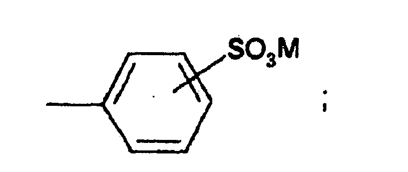
R₁₁ est un atome d'hydrogène, -Cl ou -SO₃M;
R₁₂ est -CN, -SO₃M, un groupe -S(alkyle en C₁ à C₄)₂ ou un groupe -S(aryle)₂;
R₁₃ est un atome d'hydrogène, -SO₃M, un groupe -O-alkyle en C₁ à C₄,
-CN, -Cl, un groupe -COO-alkyle en C₁ à C₄ ou un groupe - CON(alkye en C₁ à C₄)₂;
R₁₄ est un atome d'hydrogène, ou un groupe alkyle en C₁ à C₄, -Cl, ou
-SO₃M,
R₁₅ et R₁₆ sont chacun indépendamment l'un de l'autre un atome d'hydrogène, un groupe alkyle en C₁ à C₄, -SO₃M, -Cl ou un groupe -O-alkyle en C₁ à C₄,
R₁₇ est un atome d'hydrogène ou un groupe alkyle en C₁ à C₄;
R₁₈ est un atome d'hydrogène, un groupe alkyle en C₁ à C₄, -CN, - Cl, un groupe -COO-alkyle en C₁ à C₄, ou un groupe -CON(alkyle en C₁ à C₄)₂, un groupe aryle ou un groupe -O-aryle,
M est un atome d'hydrogène, de sodium, de potassium, de calcium, de magnésium, un groupe ammonium, un groupe mono-, di- ou tri-ou tétra-alkyl(en C₁ à C₄)ammonium, un groupe mono-, di- ou tri hydroxyalkyl(en C₁ à C₄)ammonium ou un groupe ammonium bi- ou trisubstitué par un mélange de groupes alkyles en C₁ à C₄ et hydroxyalkyle (en C₁ à C₄), et
n₁, n₂ et n₃ valent chacun indépendamment l'un de l'autre 0 ou 1.

2. Procédé selon la revendication 1, dans lequel le polycondensat est le polytéréphtalate d'éthylène (PET), le polytéréphtalate de butylène (PBT), le polynaphténate d'éthylène (PEN), un copolyester, PA 6, PA 6,6, un polycarbonate contenant le bisphénol A, le bisphénol Z ou le bisphénol F lié par l'intermédiaire de groupes carbonate.

3. Procédé selon la revendication 1, dans lequel le polycondensat est PBT, PET ou un copolymère comportant PBT ou PET.

4. Procédé selon la revendication 1, dans lequel le polycondensat présente une valeur L, qui est supérieure à 80 et une valeur b qui est inférieure à 2, telles que mesurées par un spectrophotomètre selon la norme ASTM D1925.

5. Procédé selon la revendication 1, dans lequel un composé de formule (I) est ajouté en tant que composant (a1).

6. Procédé selon la revendication 5, dans lequel le composé de formule (I) est de formule P1 ou P2

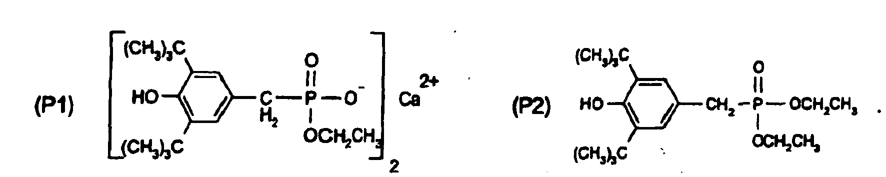

7. Procédé selon la revendication 1, dans lequel les composés selon les formules 1-8 sont les composés 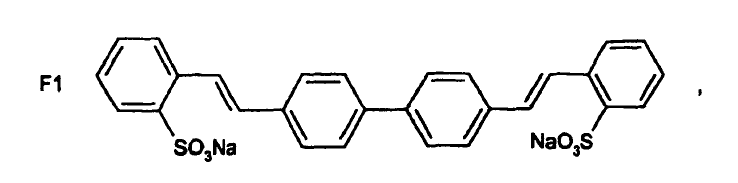 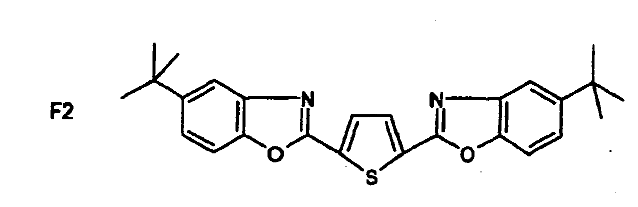 ou

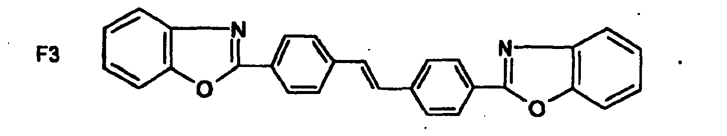

8. Procédé selon la revendication 1, dans lequel les composés de formule (I) ou (II) sont ajoutés en quantité allant de 0,01 à 5 % en poids par rapport au poids du polycondensat.

9. Procédé selon la revendication 1, dans lequel les composés selon les formules 1 - 8 sont ajoutés en quantité allant de 0,001 à 0,5 % en poids par rapport au poids du polycondensat.

10. Procédé selon la revendication 1, dans lequel le rapport pondéral des composés selon la formule (I) et (II) aux composés selon les formules 1-8 varie de 50:1 à 1:1.

11. Procédé selon la revendication 1, dans lequel il est en outre ajouté un polyanhydride, qui possède de 2 à 8 fonctions anhydride.

12. Procédé selon la revendication 1, dans lequel il est ajouté un composé polyfonctionnel supplémentaire, choisi dans le groupe constitué par un composé hydroxylique polyfonctionnel (polyol), un époxy polyfonctionnel, une amine polyfonctionnelle (polyamine), une aziridine polyfonctionnelle (polyaziridine), un isocyanate polyfonctionnel (polyisocyanate), une oxazoline polyfonctionnelle (polyoxazoline), un thiol polyfonctionnel ou une combinaison de ces composés.

13. Polycondensat pouvant être obtenu par un procédé selon la revendication 1.

14. Composition comprenant un polycondensat et
a1) un composé de formule (I), ou
a2) un composé de formule (II), ou
a3) un composé de formule (I) et (II) et
b) un composé suivant les formules 1 à 8 selon la revendication 1.

15. Utilisation d'un mélange de
a1) un composé de formule (I); ou
a2) un composé de formule (II); ou
a3) un composé de formule (I) et (II) et
b) un agent de blanchiment optique fluorescent choisi dans le groupe constitué par un composé selon les formules 1 à 8 ou un mélange de ceux-ci pour améliorer la couleur et la brillance d'un polycondensat au cours de la réaction de polycondensation.
